(19) **Europäisches Patentamt European Patent Office Office européen des brevets**

(11) **EP 4 412 189 B1**

(12) **EUROPEAN PATENT SPECIFICATION**

(45) Date of publication and mention
of the grant of the patent:
**24.12.2025 Bulletin 2025/52**

(21) Application number: **23155211.8**

(22) Date of filing: **06.02.2023**

(51) International Patent Classification (IPC):
*H04M 1/663* (2006.01)     *H04M 3/436* (2006.01)

(52) Cooperative Patent Classification (CPC):
**H04M 3/436; H04M 1/663;** H04M 1/57;
H04M 2201/40; H04M 2203/556; H04M 2203/6027

(54) **METHODS AND APPARATUS FOR DETECTING TELECOMMUNICATION FRAUD**

VERFAHREN UND VORRICHTUNG ZUR ERKENNUNG VON TELEKOMMUNIKATIONSBETRUG

PROCÉDÉS ET APPAREIL DE DÉTECTION DE FRAUDE DE TÉLÉCOMMUNICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**07.08.2024 Bulletin 2024/32**

(73) Proprietor: **Locai Labs Limited
London W2 6LG (GB)**

(72) Inventors:
• **DRAYSON, James
London, SW6 2UW (GB)**
• **KETTERER, Felix
London, SW6 2UW (GB)**
• **DRAYSON, George
London, SW6 2UW (GB)**
• **ALESHWARAM, Sujith
London, SW6 2UW (GB)**
• **REI, Marek
London, SW6 2UW (GB)**
• **DEVECI, Atalay
London, SW6 2UW (GB)**
• **COIFFARD, Lisa
London, SW6 2UW (GB)**

(74) Representative: **Leach, Sean Adam et al
Mathys & Squire
The Shard
32 London Bridge Street
London SE1 9SG (GB)**

(56) References cited:
**EP-A1- 3 873 075      US-A1- 2021 289 071
US-A1- 2021 320 997**

**Description**

Field of the invention

The present disclosure relates to a method of controlling a communications apparatus and to a communications apparatus, more particularly the disclosure relates to such apparatus and methods adapted for detecting telecommunication fraud, in particular in relation to detecting telecommunication fraud using sliding window segmentation.

Background

Telecommunication fraud is a serious and increasingly prevalent problem, responsible for causing severe financial loss to many victims each year. Financial telecommunication fraud, or "scam calls", typically deceive victims into giving out personal information, such as credit card numbers, bank account identification, and other information, which is then exploited by the caller. This is a particular problem for senior citizens who are commonly targeted and may be especially vulnerable to such fraudulent calls.

Traditional approaches to detect telecommunication fraud often rely on constructing a blacklist of telephone numbers associated with fraudulent calls. However, this may be easily overcome by fraudsters who can evade such detection by simply changing their phone numbers, something which is particularly easy to achieve through VoIP (Voice over Internet Protocol).

US 2015/0288791 discloses a process-based, automated phone fraud management system that operates over a communication network to protect a user from attempted fraud by a fraud agent. Local application software interacts with server software to provide alerts for a protected user based on phone numbers known to be, assumed to be, or found to be associated with fraud agents. The server keeps lists of phone numbers and searches those lists to classify phone numbers. Phone calls to or from numbers associated with a fraud agent are interrupted. Questionable calls are converted to text and the text is then searched to identify words and phrases commonly associated with phone fraud.

US 9,692,885 discloses detecting and providing alerts regarding a possible scam voice call by obtaining, during the voice call, a caller number and a caller voice sample. The method further comprises obtaining, via the caller number and the caller voice sample, a risk determination regarding the risk that the voice call is a scam call, and based upon the risk determination, outputting, during the voice call, an alert regarding the risk that the voice call is a scam call.

EP 3 873 075 discloses various techniques for analysis of the caller speech in order to detect and alert the called party of potential fraudulent calls.

However, current approaches are often inaccurate and may lead to many incorrect or missed determinations of telecommunication fraud. False-negative determinations of telecommunication fraud can be extremely dangerous to users, leaving the user vulnerable to fraudulent activity, often with an additional sense of trust that the call is safe as it has not been flagged as fraudulent.

Summary of the invention

Aspects of the invention are as set out in the independent claims and optional features are set out in the dependent claims. Aspects of the invention may be provided in conjunction with each other and features of one aspect may be applied to other aspects.

In a first aspect of the invention, there is provided a computer-implemented method for detecting telecommunication fraud, the method comprising:

obtaining a real-time transcription of a telecommunication call during the call;
segmenting, in real-time, the transcription using sliding window segmentation;
determining, in real-time for a leading window, a window probability (also referred to as a first probability), wherein the window probability represents a probability of telecommunication fraud for that leading window;
generating, in real-time, an aggregate probability (also referred to as a second probability) of telecommunication fraud based on the window probability of the leading window and a window probability of at least one previous window; and
sending a signal to generate an alert in the event that the aggregate probability exceeds a threshold.

Each window probability may represent a probability or confidence score that the telecommunication call is fraudulent based on the corresponding window, for example wherein 1 indicates certainty that the call is a scam, and 0 indicates certainty that the call is not a scam.

The aggregate probability may represent an overall probability or confidence score that the telecommunication call is fraudulent, based on the window probability of the leading window and a window probability of at least one previous window. Generating the aggregate probability may be based on a plurality of window probabilities comprising window probabilities for all windows generated during the telecommunication call up to the present interval, for example consisting of the leading window and all previous windows (i.e. a previous leading windows). The aggregate probability is generated in real-time and may vary as the total number of windows, and thus the total number of window probabilities, increases across the duration of the call. Generating an aggregate probability may be advantageous to allow the method to account for both short-term context of the telecommunication call (e.g. of the leading window) and long-term context (e.g. of previous windows during the call) in the probability of fraud determination. For the case of the first leading window wherein no previous windows have been generated, the skilled person will understand that a signal to generate an alert may be sent in the event that the window probability of the first leading window exceeds the threshold as there would be no aggregate probability.

The method may further comprise performing classification in real time for the leading window, and determining the window probability based on the classification of the leading window, for example using a machine learning model. However, the skilled person will understand that other methods of determining a probability of telecommunication fraud for a given window may be used, for example but not limited to a rule based approach.

Segmenting, in real-time, the transcription using sliding window segmentation may comprise recursively generating a leading window at intervals during the telecommunication call, such that a plurality of windows are generated during the call, for example the plurality of windows comprising the leading window and at least one previous window (i.e. a previous leading window). The leading window may be defined as the window generated at the most recent interval of the telecommunication call. Segmenting the transcription using a sliding window may be advantageous to allow the window probabilities and aggregate probabilities of telecommunication fraud to be generated during the call, rather than waiting until the end of the conversation to output a prediction/probability of telecommunication fraud based on a complete transcript of the call. As such, sending the signal to generate the alert may comprise sending the signal in real-time. This may be advantageous to provide the user with an indication of telecommunication call reactively during the call, for example allowing the user to take an appropriate course of action, rather than providing the indication of fraud post-event after the call has finished.

The sliding window segmentation may also be advantageous to minimise the loss of context between segmented windows which could otherwise increase inaccuracies in the generation of each window probability, for example by affecting classification performance. Such inaccuracies and loss of context may be particularly relevant in cases where call transcripts are sampled frequently in discrete non-overlapping windows using disjoint window segmentation. However, reducing the sampling rate in order to increase the amount of context for each window reduces the reactivity time of the method when using non-overlapping window segmentation. Sliding window segmentation may therefore be advantageous to minimise processing downtime and improve the reactivity of the method, whilst also minimising the loss of context between segmented windows, by allowing for more frequent sampling of the telecommunication call at intervals whilst maintaining the size of window input into the method.

The sliding window segmentation may define a window size (e.g., window duration, or the size of the input for classification, i.e., how far in the telecommunication call the window looks back), and an interval (e.g., duration between sampling subsequent windows). Thus, the sliding window segmentation may generate the leading window by sampling a predetermined window size from the transcription at each interval.

The interval size is less than the window size such that adjacent windows overlap with one another. The time between intervals must also be greater than the inference time of the method to allow the method to output a window probability before the next interval. The interval size may be determined based on at least one of (i) recall, and (ii) precision of results. Precision may be defined by the following:

$$precision = \frac{no.\,of\ true\ positive\ determinations\ of\ telecommunication\ fraud}{(no.\,of\ true\ positive\ determinations\ +\ no.\,of\ false\ positive\ determinations)}$$

Recall may be defined by the following:

$$recall = \frac{no.\,of\ true\ positives}{(no.\,of\ true\ positives\ +\ no.\,of\ false\ negatives)}$$

Both recall and precision may be determined based on performing classification for differing window sizes and interval sizes on a known data set, wherein the known data set includes scam calls (i.e., telecommunication fraud calls) and non-scam calls (i.e., legitimate calls).

Improving recall is desirable to minimise false negative determinations. Improving precision is desirable to minimise false positive determinations. Preferably, the interval is determined predominantly based on recall which may reduce the incidence of false negative determinations of telecommunication fraud, however this may increase the incidence of false positive determinations of telecommunication fraud. Determining the interval based predominantly on precision may instead lead to more false negative determinations which can compromise the safety of the user. As such, the determined interval size may be biased towards an interval size which causes the method to incorrectly flag non-scam calls as fraudulent, rather than not flag actual scam calls.

The window size and/or interval may be defined in terms of time or number of tokens. In examples where at least one of the window size and interval is defined in terms of number of tokens, the method may comprise performing NLP to segment the transcription into tokens via tokenisation. Segmenting the transcription into a plurality of windows in real time may then be based on the tokens. Preferably, the interval may be defined in terms of time, and the window size may be defined in terms of tokens. It may be advantageous to define the interval in terms of time to ensure that there is sufficient processing time for a window probability to be generated for the leading window between intervals. It may be advantageous to define the window in terms of tokens to ensure that the maximum amount of context is accounted for in each window. Purely for illustrative purposes, if the window size were set to 512 tokens and the interval size was set to 30 seconds, the method may obtain the most recent 512 tokens (i.e., the leading window) every 30 seconds and generate a window probability on this basis. However, the skilled person will understand that the actual window size may be less than the maximum window size, for example when there are fewer tokens available as input compared to the maximum window size, such as at the beginning of a telecommunication call. In this case, the method may obtain all available tokens at each interval (e.g. every 30 seconds) until the total number of available tokens is greater than the maximum window size, after which the maximum window size is obtained.

Alternatively, the interval may be dynamically based on processing of the previous window being completed. For example, in response to receiving an indication that the window probability for the leading window has been determined, the method may be configured to sample the subsequent window according to the pre-determined window size, such that the interval between sampling windows is based on the completed generation of the window probability of the leading window. Alternatively or in addition, in response to receiving an indication that the aggregate probability comprising the window probability of the leading window has been generated, the method may be configured to sample the subsequent window according to the pre-determined window size, such that the interval between sampling windows is based on the completed generation of the aggregate probability, comprising the window probability of at least the leading window.

In some examples, the interval may be determined according to a minimum time and sentence structure of the transcription. For example, the interval may have a minimum duration from the previous window sampling, however, if after the minimum duration, the method identifies that the transcription is mid-sentence, the interval may be dynamically extended to ensure that the sampling of the window does not split a sentence. As such, the interval will then be determined by the end of the sentence occurring at the minimum interval time. A window will then be determined at the end of the sentence based on the extended interval, the window having the predetermined window size. For the subsequent leading window, the interval then resets to the minimum time, however again, the interval may be dynamically extended to ensure that the subsequent leading window does not split a sentence. This may be advantageous to reduce instances where context is lost or misinterpreted by reason of the final sentence being incomplete.

The window size is preferably the maximum possible window size to allow maximum amount of content and context to be considered. For example, when using a transformer model for classification of windows, the window size may be set at the highest possible token length. For example, if using a Bidirectional Encoder Representations from Transformers (BERT) model, the window size may be set to 512 tokens. Using the largest token length may be advantageous to account for the largest amount of context of the entire call when generating the window probability of whether the window contains telecommunication fraud. This is because some scams may only be revealed whilst knowing what was said in previous sentences. For example, if a caller is requesting a payment, this does not necessarily mean it is a scam call and the window probability generated based on this alone may indicate a moderate to low risk of the call being a scam call. However, if the segmented transcription identifies that caller had preceded the payment request with, for example, a threat or impersonation of HM Revenues & Customs (HMRC), this context would be captured by the large window size, meaning the resulting window probability would indicate a high probability that the call is a scam call, likely exceeding the threshold in order to send the signal to generate the alert.

The real-time transcription of a telecommunication call may be obtained by speech-to-text conversion of an audio stream of the telecommunication call, preferably a live audio stream of the telecommunication call. In some examples, speech-to-text conversion may be performed at the first user device to generate the real-time transcript. Alternatively, the speech-to-text conversion may be performed at a remote server based on an obtained real-time audio stream of the telecommunication call.

The method may be configured to be performed by a first user device, for example wherein the first user device is a participant device in the telecommunication call. Alternatively, the method may be configured to be performed by a remote server.

The skilled person will understand that, for the purposes of this application, "real-time" need not be limited to mean "instantaneously" or "at the exact actual time during which a process or event occurs." Instead, "real-time" may be construed to encompass "at a time during the telecommunication call." This means the aggregate probability, alongside any other parameters and/or precursors, are generated during the telecommunication call. This may be advantageous to facilitate sending the signal to generate the alert during the telephone call to better protect the user from fraudulent activity during the call, rather than delaying generation of the aggregate probability, and/or the general method, until after the call has ended, for example when a complete transcription of the telecommunication call is available. The definition of "real-time" may encompass processing delays, for example including delays arising from segmenting live transcription data for processing.

The method may further comprise identifying different speakers in the transcription, for example by adding speaker labels. Identification of the different speakers may be based on speaker diarisation of the audio stream of the telecommunication call, for example by voice analysis, or based on the transcription itself, for example using NLP. This allows natural language model(s) and/or fraud classification model(s) to determine what is said by each speaker and thus what corresponds to the caller and the callee. Identification of different speakers in the transcription may be used during segmentation and/or classification to analyse the overall sentiment and context of each speaker, for example to more accurately determine whether the caller is likely to be behaving in a threatening or fraudulent manner. This may improve the accuracy of the generated window probabilities.

The method of the present invention may initiate automatically in response to obtaining an indication that an incoming telecommunication call at a first user device originates from an unknown telephone number. An "unknown telephone number" may be defined as a telephone number which is not saved to a whitelist. The whitelist may include at least one of: (i) a whitelist managed by the first user device, for example a contacts list, and (ii) a whitelist of a trusted third party, for example a whitelist of verified company caller IDs. This may be advantageous to ensure a situation does not occur in which the user forgets to manually activate the method in response to a potential fraudulent call.

The method may further comprise receiving an indication from the first user device that the telecommunication call originates from a trusted source, for example based on user input. Responsive to receiving the indication, the method may terminate. This may be advantageous to protect user privacy by ceasing to monitor and obtain transcriptions for trusted calls. Furthermore, the method may additionally comprise adding the telephone number associated with the source of the incoming call to a whitelist, responsive to the received indication of trust.

Performing classification on the transcription may be based on identifying language or conversational semantics and/or context which is associated with telecommunication fraud. This may be achieved by training machine learning model(s) using training data including scam calls, including but not limited to neural network(s).

The method may further comprise performing natural language processing (NLP) on the transcription of each window prior to and/or during performing classification. Performing NLP may comprise pre-processing the transcript, for example by removing stop words and using lemmatization. For example, performing NLP may comprise extracting key words and context from the transcription for classification, for example removing filler words such as but not limited to "and", "the", and hesitations such as "um" or "er". This may also be trained on a custom dictionary, specific to fraudulent telecommunication calls. This may increase the efficiency of the classification step by reducing the amount of data input and thus the required processing power, as well as increasing the speed of classification. Performing NLP may also comprise segmenting the transcription into tokens via tokenisation as described above.

Generating the aggregate probability of telecommunication fraud may comprise aggregating the plurality of window probabilities, wherein the plurality comprises all window probabilities generated so far during the telecommunication call. This may be advantageous to ensure the aggregate probability accounts for the context of previous window probabilities. This may help to reduce the incidence of false-positive and false-negative determinations of telecommunication fraud.

Aggregating the plurality of window probabilities (or "first probabilities") may comprise aggregating the window probabilities for each window based on adaptive weightings of each window. This may be advantageous to enable tuning of the aggregate probability based on the relevance of previous windows. The weightings may be configured such that window probabilities of recent windows are more favourably weighted than the window probabilities of older windows, for example wherein the weighting applied to the window probability of a given window decays exponentially with the progression of the telecommunication call. Thus, the aggregate probability would be biased towards what has happened most recently during the call. This may be advantageous because many scam calls appear normal or unsuspecting in the first instance (e.g., first 20 minutes of the call), but then the level of identifiable fraudulent language increases in the latter parts of the call once trust has been established with the call recipient. Alternative methods of generating the aggregate probability relying on a simple average of the window probabilities may send the signal to generate the alert slower in response to such scam calls, or fail to detect such scam calls at all, because the threshold value has not been reached as a result of low-risk probabilities for the earlier windows of the call, putting the user at risk in cases where fraudulent activity is concentrated in the latter windows of the call.

The method may further comprise receiving an indication of an incoming telecommunication call at a first user device and forwarding or routing the telecommunication call to a Voice over Internet Protocol, VOIP, entity. A real-time audio stream of the telecommunication call from the re-routed telecommunication call may then be obtained, and subsequently the real-time transcription of the telecommunication call may also be obtained, based on the real-time audio stream. For example, the real-time transcription of the telecommunication call may be obtained based on the real-time audio stream using speech to text processing. Forwarding or routing the telecommunication call to a VOIP entity may be advantageous to obtain access to the real-time audio stream of the telecommunication call without requiring complex authorisation procedures and configuration of permissions to access the real-time audio stream of the telecommunication call from the user device receiving the telecommunication call directly. Forwarding or routing the telecommunication call to a VOIP entity may be based on receiving an indication that the incoming telecommunication call originates from a telephone number which is not on a pre-determined whitelist, for example a whitelist as discussed above. The skilled person will understand that forwarding or routing the telecommunication call to a Voice over Internet Protocol, VOIP, entity may comprise, but is in no way limited to, Session Initiation Protocol (SIP) trunking.

The VOIP entity may be a device, such as a server, or a virtual device, such as software running on a hardware device. The real-time audio stream may be obtained from / at / by the VOIP entity. The VOIP entity may convert the real-time audio stream into a digital signal, compress it, and send it over the internet. The VOIP entity sets up the call between all participants. On the receiving end, the digital data is then uncompressed into the audio data of the telecommunication call. The VOIP entity may also record the telecommunication call.

Sending the signal to generate the alert in the event that the aggregate probability exceeds a threshold may comprise sending a signal in a first communication channel to a first user device, wherein the first user device is a participant of the telecommunication call. For example, wherein the first user device is a recipient or receiver of the telecommunication call.

The first communication channel may also be configured to transmit the audio stream of the telecommunication call to the first user device. In such examples, sending the signal via the first communication channel may comprise adding audio data into the audio stream, for example wherein the added audio data may comprise an audible alert. This may be advantageous to generate an alert in a way that will not be missed by the user, because the user is already engaged in listening to the audio stream of the telecommunication call. The audible alert may comprise at least one of (i) a warning sound; or (ii) a warning message.

Adding audio data into the audio stream may be configured to interrupt the telecommunication call with the audible alert. This may be advantageous to ensure the audible alert is not missed or drowned out by other audio data from the audio stream (e.g., the voice data of the telecommunication call), for example as may be the case if the audible alert were merely incorporated alongside the audio stream of the telecommunication call. In addition to, or instead of, the audible alert, sending the signal to generate the alert in the event that the aggregate probability exceeds a threshold may comprise sending a signal to generate a visual notification and/or haptic alert at the first user device, such as vibrational alert at the user device.

In the event that the aggregate probability exceeds a threshold, the method may further comprise pausing the audio stream of the telecommunication call transmitted via the first communication channel to the first user device, and/or putting the telecommunication call on hold. This may be advantageous to prevent the fraudulent telecommunication call from progressing and shield the user from further exposure to the scam. However, the method may reverse the pausing and/or hold step in response to receiving an override signal from the first user device, based on user input, for example where the user requests to continue the call.

In addition to, or instead of, sending the signal via the first communication channel to the first user device, the method may comprise sending the signal to generate an alert in the event that the aggregate probability exceeds a threshold via a second communication channel to the first user device, wherein the first user device is a participant of the telecommunication call, and wherein the second communication channel is separate to the first communication channel.

For example, the signal sent in the second communication channel may be configured to cause the first user device to generate at least one of (i) a haptic response, such as a vibrational alert, (ii) a visual alert, such as a push notification), and/or (iii) an audible alert. The at least one alert and/or haptic response may be configured to be generated in parallel with (e.g., during) the transmission of audio stream.

Sending the signal to generate the alert in the event that the aggregate probability exceeds a threshold may further comprise:

sending a signal, via the second communication channel, to the first user device to generate an alert on the first user device;
receiving a signal from the first user device, via the second communication channel, in response to the alert; and
establishing a third communication channel to a second user device based on a device identifier associated with the alert.

The second user device may not be an original participant of the telecommunication call, for example the second user device may be associated with a trusted contact, such as an emergency contact, family member, or bank manager, etc. This may alert the trusted contact that a potentially fraudulent call is in progress with the first user device. This may be particularly advantageous for vulnerable user groups.

The method may further comprise sending a signal, via the third communication channel, to the second user device to generate an alert on the second user device. The alert may be configured to provide detail to establish a third communication channel. The alert may, alternatively or in addition, be configured to generate a visual alert, such as an SMS message or push notification. This would allow the second user to decide on what step to take to help the first user.

Sending the signal to generate the alert on the second user device may further comprise sending a signal to the second user device, via the third communication channel, to request that the second user device joins the telecommunication call. The method may then comprise receiving a signal from the second user device, via the third communication channel, in response to the signal to request that the second user device joins the telecommunication call; and adding the second user device to the telecommunication call, via the first communication channel, in response to the received signal from the second user device. This may be advantageous to allow a trusted third party, such as an emergency contact or bank representative, to be added to the call. Adding the second user device to the telecommunication call may comprise adding the second user device to the telecommunication call via conference calling.

Establishing a third communication channel may comprise retrieving a stored phone number of the second user device, for example from a memory or the first user device and using the stored phone number to establish the third communication channel to the second user device. Alternatively, the stored phone number of the second user device may be retrieved from a memory of the remote server.

The second user device may be added as an endpoint of the first communication channel, wherein the first communication channel comprises the audio stream of the telecommunication call. For example, such that the second user device is added to the telecommunication call, for example by conference call.

The method may further comprise determining a language based on at least one window of the transcript, selecting a classification model from a set of classification models, based on the detected language, and performing classification using the selected model, wherein the selected model is pretrained using training data in the detected language. This may be advantageous to identify scam calls or telecommunication fraud across a variety of languages. Similarly, the method may further comprise selecting an NLP model from a set of NLP models, based on the detected language, and performing NLP using the selected model, wherein the selected model is pretrained using training data in the detected language.

The method may further comprise encrypting the real-time transcription of the telecommunication call. This may be advantageous in embodiments where the transcription is generated at the first user device and sent to a remote server for processing. Alternatively, the method may further comprise encrypting a recorded audio stream of the telecommunication call. This may be advantageous in embodiments where the recorded audio stream, or real-time segments thereof, are recorded at the first user device or VOIP entity and sent to a remote server to generate the transcription.

Encryption may comprise:

> (i) generating a random encryption key, REK;
> (ii) encrypting the recording and/or transcription with the random encryption key, REK; and
> (iii) encrypting the random encryption key, REK, with a public key of a public-private key pair. The encrypted recording (and/or the encrypted transcript) and the encrypted random encryption key may then be sent to the destination device, for example a remote server or virtual device.

The destination device may then decrypt the obtained random encryption key using a private key of the public-private key pair, and subsequently decrypt the encrypted recording and/or transcription using the decrypted random encryption key.

The method may further comprise applying a first processing step to the transcript, the first processing step being configured to identify at least one type of alphanumeric data. The method then replaces in the transcription each instance of the at least one type of alphanumeric data with an indication of the type of alphanumeric data. This may be performed using natural language processing. For example, types of alphanumeric data may include, but are not limited to, names, addresses, date of birth, bank details, including account number and sort code, any type of personally identifiable information (PII), and/or any type of sensitive personal information (SPI). Purely for illustrative purposes, "My bank details are 12345678 and 01-01-01" may be replaced with "My bank details are [Type I data] and [Type II data]", wherein Type I data signifies a bank account number, and Type II data signifies a sort code. Preferably, the first processing step is performed before classifying to determine, for each window, a window probability. The subsequent determination of the window probabilities then takes into account the indication of the type of alphanumeric data. This may be advantageous to reduce the amount of data needed to be processed using classification model(s), thus reducing bandwidth and/or overhead processing power, and increasing efficiency of the data. This may also be advantageous to improve classification accuracy by labelling information. Furthermore, this may be advantageous to remove personally identifiable information and address privacy concerns, for example by anonymising or pseudo-anonymising the transcription. Where the first processing step is performed before sending the transcription (for example, in embodiments where the transcription is sent to a server for classification) this may reduce the amount of data from the transcription to be sent, thus reducing bandwidth or overhead processing power, and increasing efficiency of the data. Similarly, where the first processing step is performed before encryption, this may reduce the amount of data from the transcription to be encrypted, thus reducing bandwidth or overhead processing power, and increasing efficiency of the data. However, the skilled person will understand that the first processing step may also be performed after sending the transcript, and/or after decryption.

Classifying each window may further comprise applying a plurality of classification models to each window, wherein each classification model outputs an indication of telecommunication fraud, and applying a weighting to the indication of each classification model. Generating the window probability may then be based on aggregating the weighted indications of each classification model. This may be advantageous to optimise the generation of the window probability because different models may work in different ways, for example focussing on different parameters, and therefore output different confidence levels and have different reported accuracies. By aggregating probabilities generated from a plurality of classification models, this may improve classification accuracy by aggregating models with different focuses and contexts, therefore allowing more aspects of the call to be analysed. The indication of telecommunication fraud output for each model may be a probability of telecommunication fraud, for example between 0 and 1.

Example classification models used to perform classification may include, but are not limited to, neural network models (such as, but not limited to, Long short-term memory and Transformers with Classification & Sentiment Analysis, including hierarchical Transformer models), Machine Learning models applied to keyword classification (such as, but not limited to, Naive Bayesian, Support Vector Machine, Logistic Regression, Decision trees), and Readability Tests, for example but not limited to Flesch-Kincaid tests, to determine the relative language level of the caller. As an example, a readability test may analyse word length, number of words, or syllables, and/or sentence length to determine a weighted scoring indicating how difficult the transcription is to understand. The classification models may be trained on scam call data that is collected from at least one of: Honeypots, Scam Baiter call transcripts, Web-crawling, Callee-generated transcripts, and scam-related data in textual and audio format from public and private (non)-governmental databases (including databases of crime-enforcement agencies). The classification model may also be improved as it is continuously trained on data collected from users, for example wherein call transcripts obtained as part of the present invention are subsequently used as training scam call data, for example when the user opts in.

The weighting applied to the indication of each classification model may be adaptive, for example based on at least one of (i) precision, and (ii) recall of the cumulative model that outputs the window probability. This may be advantageous to bias the generation of each window probability based on the best overall performance of the combination of models, however the precision and recall of the classification models may change, for example as the models learn based on more data input, thus the adaptive weightings are configured to adapt to reflect this.

Alternatively, or in addition, the weighting applied to the indication of each classification model may be adaptive, for example based on at least one of (i) precision, and (ii) recall of the respective model itself. This may be advantageous to bias the generation of each window probability based on the best model, however the precision and recall of the classification models may change, for example as the models learn based on more data input, thus the adaptive weightings are configured to adapt to reflect this. In some embodiments, the window probability for a window is taken to be the indication of telecommunication fraud generated by the most optimised model, wherein the most optimised model is defined based on at least one of (i) precision, and (ii) recall of the model (i.e. wherein the weightings applied to the indications of telecommunication fraud generated by all other models are weighted to zero).

The method may further comprise applying a first set of rules to the transcription to generate an outcome for each rule, wherein each outcome provides a binary indication of telecommunication fraud, and sending a signal to generate an alert in the event that at least one outcome indicates that the telecommunication call is fraudulent. This may be advantageous to immediately generate an alert in the event that a rule is breached (or fulfilled), bypassing the requirement for the aggregate probability to exceed the threshold. This may increase the reaction time of the method to identify telecommunication fraud and reduce incidences of false negative determinations. For example, the first set of rules may comprise a rule that a caller should never request a PIN number, because a legitimate caller would never ask for a PIN number. Thus, if the caller of the telecommunication asks for a PIN number, a binary indication that the call is fraudulent is outputted, and a signal is sent to generate an alert at the first user device.

In some examples, the method may further comprise sending a signal to generate an alert in the event that the window probability of the leading window exceeds a window threshold. The window threshold may be higher than the threshold(s) applied to the aggregate probability. This may increase the reaction time of the method to identify telecommunication fraud and reduce incidences of false negative determinations in instances of a high probability or certainty of the leading window being fraudulent.

The method may further comprise determining a location of a third user device, the third user device being a caller of the telecommunication call, selecting a regulatory message from a set of regulatory messages, based on the location of the third user device, and sending a signal to send the selected regulatory message to the third user device. This may be advantageous to comply with regulation requirements which vary territorially. Sending the signal to send the selected regulatory message may comprise sending a signal to request acceptance of terms and conditions, for example consenting to call monitoring and/or recording in order to proceed with the call.

The method may further comprise a plurality of thresholds and/or ranges, and a set of signals, each signal being configured to generate a different alert and corresponding to at least one of the thresholds and/or ranges. The method then comprises sending at least one of the signals from the set of signals to generate an alert in the event that the aggregate probability exceeds one of the corresponding thresholds, and/or lies within one of the corresponding ranges. This may be advantageous to provide a tiered response proportional to the probability of the telephone call being fraudulent. This may also reduce the incidence of intrusive alerts in the case of false-positive determinations.

For example, in response to an aggregate probability score of 0.5, the method may send a first signal of the set to generate a first alert, for example the first alert corresponding with a first audio/visual message being sent to the first user device, such as "Be vigilant, this could be a scam." In response to an aggregate probability score of 0.7, the method may send a second signal of the set of signals to generate a second alert, for example the second alert corresponding with a second audio/visual message being sent to the first user device, such as "Your scam detection software recommends that you hang up the call." In response to an aggregate probability score of 0.9, the method may send a third signal of the set of signals to generate a third alert, for example the third alert corresponding with the call automatically being disconnected and a notification being sent to the first user device to that effect, etc. However, the skilled person will understand it is not required to escalate the response by sending each signal of the set separately and/or sequentially, for example in the event that the aggregate probability rises from, say, 0.4 to 0.9, the method may send the third signal only as a first signal from the set of signals.

The tiered response may provide the user with a better sense of risk rather than merely outputting an overall determination. The thresholds and/or ranges associated with the set of signals may also be adaptive and dynamically tuned based on at least one of the (i) accuracy, (ii) recall, and (iii) precision of the classification. This may depend on the (i) accuracy, (ii) recall, and (iii) precision of the classification model(s) used to generate the window probabilities.

In the event that the call is disconnected in response to the aggregate probability being reached, the method may further comprise sending a signal to the device that initiated the call, e.g. the third user device, to notify the caller. Sending the signal may comprise sending a visual and/or audio message stating a reason for the end of the call.

If the caller has any queries or objections, they may contact a designated source, for example a phone number or support email. This will open an investigation to address each instance of a false positive scam determination, in which each instance can be thoroughly investigated, and the results can be used to fine-tune the model to further prevent such false positives in the future.

In second aspect of the invention, there is provided a computer-implemented method for detecting telecommunication fraud, the method comprising:

> obtaining a real-time transcription of a telecommunication call during the call;
> segmenting, in real-time, the transcription into a plurality of windows;
> determining, for each window in real time, a window probability based on the transcription of the window, wherein the window probability represents a probability of telecommunication fraud for the window;
> generating, in real-time, an aggregate probability of telecommunication fraud based on aggregating the plurality of window probabilities, wherein each window probability is assigned a relative weighting based on the recentness of the associated window; and
> sending a signal to generate an alert in the event that the aggregate probability exceeds a threshold.

The weightings may be configured such that window probabilities of recent windows are more favourably weighted in the aggregate probability than the window probabilities of older windows, for example wherein the weighting applied to the window probability of a given window decays exponentially with the progression of the telecommunication call. Thus, the aggregate probability would be biased towards what has happened most recently during the call. This may be advantageous because many scam calls appear normal or unsuspecting in the first instance (e.g., first 20 minutes of the call), but then the level of identifiable fraudulent language escalates in the later parts of the call, once trust has been established with the call recipient. Alternative methods of generating the aggregate probability relying on a simple average of the window probabilities may send the signal to generate the alert slower in response to such scam calls, or fail to detect such scam calls at all, because the threshold value has not been reached as a result of low-risk probabilities for the earlier parts of the call, putting the user at risk in cases where fraudulent activity is concentrated in the latter parts of the call.

"Recentness" may refer to the recency of the generation of the associated window, relative to the recency of generation of the plurality of windows during the telecommunication call. For example, windows may be segmented at intervals. Thus, at the beginning of the call, the first segmented window is determined to be relatively recent relative to the plurality of windows which may only consist of the first window itself. However, as the telecommunication call progresses, the total number of windows generated increases, and thus the recentness of the first window diminishes because it was generated less recently relative to the extended plurality of windows generated during the telecommunication call. "Recentness" may additionally or instead refer to the recency of the generation of the associated window, relative to the most recently generated window (e.g. the leading window).

Segmenting, in real-time, the transcription into a plurality of windows may comprise segmenting using sliding window segmentation, as described in relation to the first aspect of the invention. Alternatively, segmenting in real-time, the transcription into a plurality of windows may comprise segmenting in discrete non-overlapping windows using disjoint window segmentation.

The skilled person will understand that optional features of the first aspect of the invention may also apply to the second aspect of the invention.

In another aspect of the invention, there is provided a user equipment device configured for use in a telecommunication network, the user equipment device comprising:

a wireless communication interface configured to receive telecommunication calls; and
a processor, the processor comprising a speech to text module and a fraud classification module, wherein the processor is configured to:

generate, at the speech to text module, a real-time transcription of a telecommunication call received by the wireless communication interface;
segment, in real-time, the transcription using sliding window segmentation;
perform, at the fraud classification module, classification on the transcription of a leading window;
determine, at the fraud classification module, for the leading window, a window probability based on classification of the leading window, wherein the window probability represents a probability of telecommunication fraud for the leading window;
generate, at the fraud classification module, in real-time, an aggregate probability of telecommunication fraud based on the window probability of the leading window and a window probability of at least one previous window; and
signal, in real-time, to generate an alert at the user equipment device in the event that the aggregate probability exceeds a threshold.

User equipment, sometimes referred to as a UE, may comprise any appropriate communications device configured to communicate via wide area communications network, WAN, and having a human user interface for conducting voice or video calls. Examples of such devices include cell phones, tablet devices and suitably adapted computer terminals.

In another aspect of the invention, there is provided a computing system comprising a processor configured to perform the method of the first aspect of the invention.

In another aspect of the invention, there is provided an apparatus configured for use in a telecommunication network, the apparatus comprising:

a Voice-Over-Internet-Protocol, VOIP, entity configured to receive telecommunication calls; and
a fraud classification module, wherein the fraud classification module is configured to:

obtain a real-time transcription of a telecommunication call received by the VOIP entity;
segment, in real-time, the transcription using sliding window segmentation;
perform classification on the transcription of a leading window;
determine, for the leading window, a window probability based on classification of the leading window, wherein the window probability represents a probability of telecommunication fraud for said window;
generate in real-time, an aggregate probability of telecommunication fraud based on the window probability of the leading window and a window probability of at least one previous window; and
send, in real-time, a signal to generate an alert in the event that the aggregate probability exceeds a threshold.

The apparatus may further comprise a speech to text module, wherein the speech to text module is configured to generate the real-time transcription of a telecommunication call received, and wherein the fraud classification module is further configured to obtain the real-time transcription from the speech to text module.

The apparatus may be a remote server, wherein the VOIP entity, fraud classification module, and optionally the speech to text module are hosted on the remote server. Alternatively, the apparatus may comprise a plurality of remote servers, for example wherein the VOIP entity and fraud classification module are each hosted on a separate server. Optionally, the speech to text module may be hosted on the remote server of the VOIP entity, the remote server of the fraud classification module, or a separate remote server.

In another aspect of the invention, there is provided a computer readable non-transitory storage medium comprising a program for a computer configured to cause a processor to perform the method of the first aspect of the invention.

In another aspect of the invention, there is provided a computing system comprising a processor configured to perform the method of the second aspect of the invention.

In another aspect of the invention, there is provided a computer readable non-transitory storage medium comprising a program for a computer configured to cause a processor to perform the method of the second aspect of the invention.

Drawings

Embodiments of the disclosure will now be described, by way of example only, with reference to the accompanying drawings, in which:

Fig. 1 shows a flow chart of an example method of the present invention.
Fig. 2A shows a first example system, configured to perform the method of Fig. 1.
Fig. 2B shows a second example system, configured to perform the method of Fig. 1.
Fig. 2C shows a third example system, configured to perform the method of Fig. 1.
Fig. 2D shows a fourth example system, configured to perform the method of Fig. 1.
Fig. 3A shows a schematic illustrating disjoint window segmentation.
Fig. 3B shows a schematic illustrating sliding window segmentation, for example as used by the method of Fig. 1.
Fig. 4 shows an example block diagram of a user equipment device for use in a telecommunication network configured to perform the method of the present invention, for example configured for use with the system of Fig. 2A.
Fig. 5 shows an example block diagram of an apparatus configured to perform the method of the present invention, for example configured for use with the system of Figs. 2C and 2D.
Fig. 6 shows an example system configured to perform the method of the present invention, for example configured for use with the system of Fig. 2C.

Specific description

Embodiments of the claims relate to a method and apparatus for detecting telecommunication fraud, in particular in relation to detecting telecommunication fraud using natural language processing.

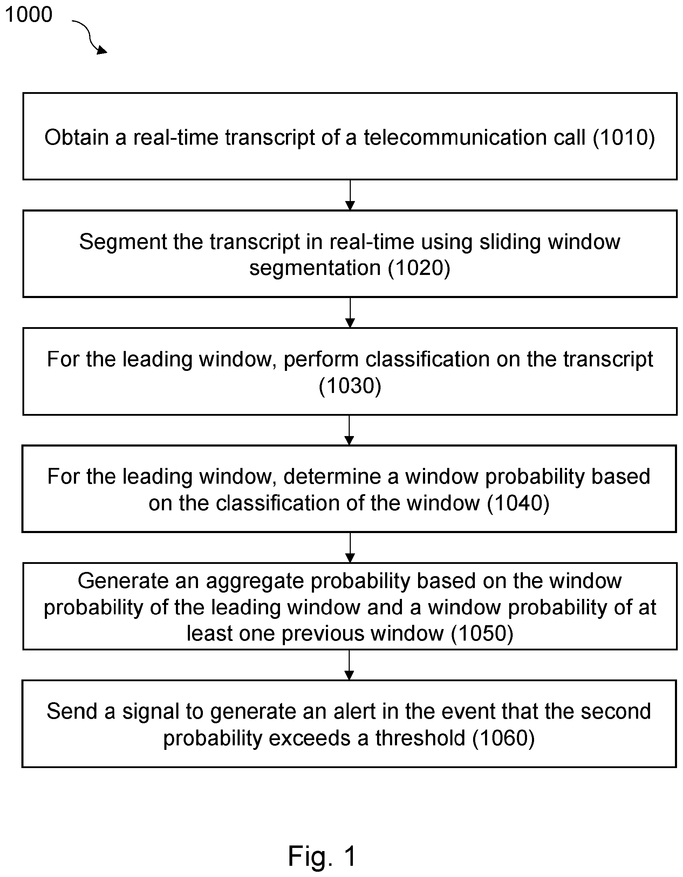

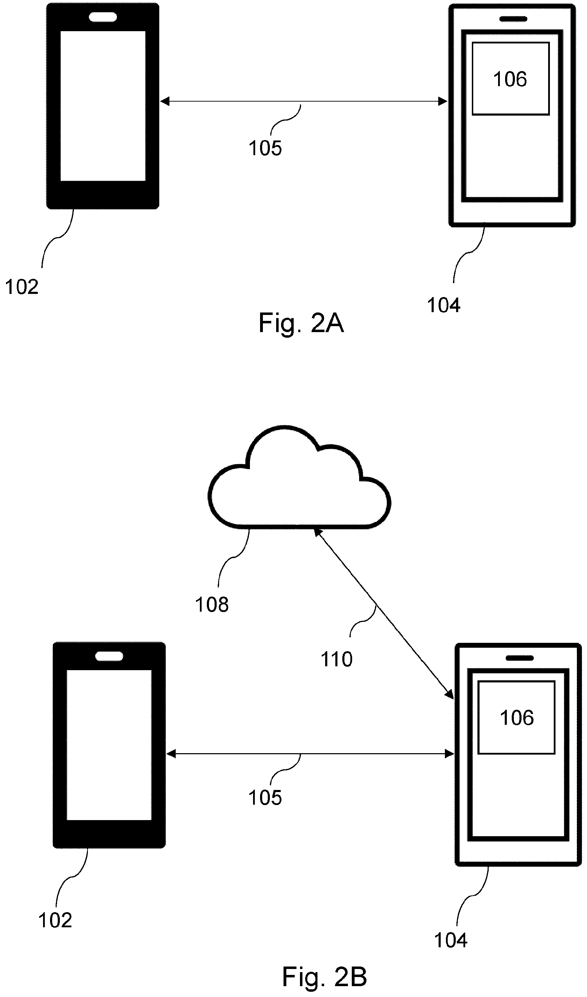

**Fig. 1** shows a flow chart of an example method of the present invention which will now be discussed with reference to each of the example systems shown in Figs. 2A-2C.

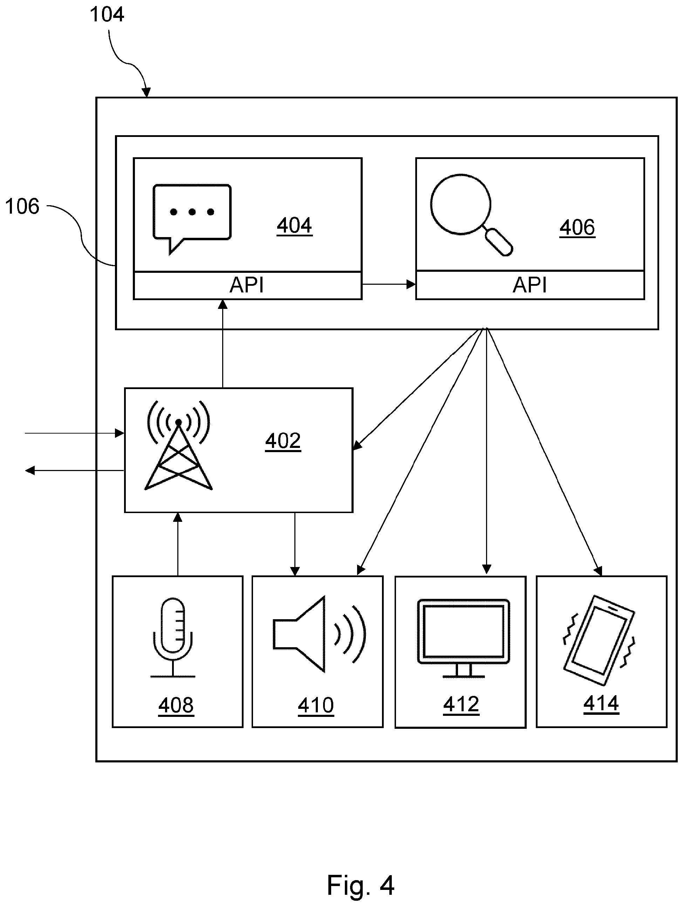

**Fig. 2A** illustrates a first example system comprising a caller user device 102 and a callee user device 104. In this example, the caller user device 102 and callee user device 104 are depicted as smartphones, however the skilled person will understand that the caller user device 102 may be any other user equipment device configured for use in a telecommunication network, for example any other device configured to initiate and participate in a telecommunication call, including but not limited to VOIP calls, and the callee user device 104 may be any other user equipment device configured for use in a telecommunication network, for example any other device configured to receive and participate in a telecommunication call, including but not limited to VOIP calls. An example embodiment of a suitable callee user device 104 configured to perform the method of the present invention is shown by way of a block diagram in **Fig. 4.**

**Fig. 4** comprises a user equipment device configured for use as a callee user device 104. The device 104 comprises a wireless communication interface 402 configured for use in a telecommunication network to participate in telecommunication calls with at least one other user device. The wireless communication interface 402 is coupled to a speaker 410, wherein the speaker 410 is configured to emit sound based on audio stream data of a call received by the wireless communication interface 402. The wireless communication interface 402 is also coupled to a microphone 408, wherein the microphone 408 is configured to record sound to add to the audio stream of a call, the wireless communication interface 402 being configured to transmit the recorded sound to other user device(s) in the call.

The device 104 further comprises a processor 106. The processor 106 comprises a speech to text processing module 404, wherein the wireless communication interface 402 is configured to communicate with the speech to text processing module 404 via an API. The speech to text processing module 404 comprises a speech recognition model configured to generate a transcription of audio stream from a call in real-time, as received from the wireless communication interface 402.

The processor 106 also comprises a fraud classification module 406. The speech to text processing module 404 is configured to communicate with the fraud classification module 406 via an API to send the generated transcription to the fraud classification module 406. The fraud classification module 406 comprises a fraud classification model configured to perform classification on the transcription generated by the speech to text processing module 404 to determine a probability of the call being fraudulent.

The processor 106 is also coupled to the speaker 410, as well as a display 412 of the device 104, and a motor 414 configured to generate vibration of the device 104.

Returning to the system of Fig. 2A, the caller user device 102 initiates a telecommunication call with the callee user device 104 via the wireless communication interface 402. In the event that the phone number associated with the caller user device 102 is unknown to the callee user device 104, for example meaning the phone number of the caller user device 102 is not on a White List stored on a memory (not shown) of the callee user device 104, the processor 106 of the callee device 104 generates a real-time transcription of a telecommunication call (1010) using speech to text conversion by the speech to text processing module 404. The transcription is generated based on the audio stream of the telecommunication call in real-time. The processor 106 identifies the caller and the callee in the transcription based on the audio data in the audio stream received from the caller device 102 at the wireless communication interface 402 and the audio data in the audio stream received from the callee device 104 at the microphone 408.

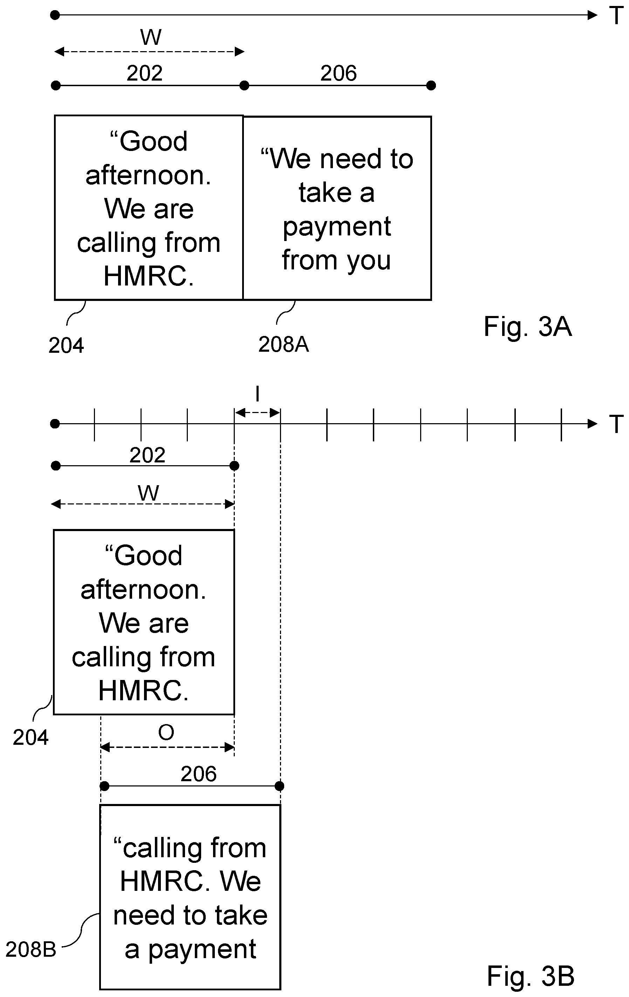

As the transcription is generated in real-time, the processor 106 of the callee device 104 performs segmentation of the transcript, also in real-time (1020), using sliding window segmentation. The transcription is recursively segmented into a leading window at intervals during the telecommunication call, such that a plurality of windows are generated during the call. A schematic illustrating sliding window segmentation is shown in more detail in Fig. 3B. **Fig. 3B** illustrates a first window 202, having a window size or duration, W. Purely for illustrative purposes, an example segment of a transcription 204 is depicted for the first window 202. Similarly, an example segment of a transcription 208B is depicted for the subsequent window 206 (now the leading window). The interval, I, is less than the window size, W, of the first window 202, such that the adjacent window 206 overlaps with the first window 202. The duration of the overlap, O, carries forward context from the previous window.

For comparison, a schematic illustrating disjoint window segmentation is shown in Fig. 3A.

**Fig. 3A** illustrates a first window 202, having a window size or duration, W. Purely for illustrative purposes, an example segment of a transcription 204 is depicted for the first window 202. Similarly, an example segment of a transcription 208A is depicted for the adjacent window 206. The interval, I, between the start of a first window 202 and the start of the adjacent window 206 is equal to the duration, W, of the first window 202, such that there is no overlap between the first window 202 and the adjacent window 206 and none of the transcription is skipped (for example as would be the case where the interval is greater than the duration W). The number of windows increases as the telecommunication call progresses, indicated by T. T may indicate the time progression of the call, or the total number of tokens of the call. Purely for illustrative purposes, if a caller purports to be from HMRC, as indicated in the first window 202, this is not necessarily a scam and thus the window probability generated based on classification of the first window may indicate a low to moderate risk of the call being a scam. Similarly, if a caller is requesting a payment as indicated by the second window 206 in Fig. 3A, this alone also does not necessarily mean it is a scam call and the window probability generated based on window 206 may also indicate a low to moderate risk of the call being a scam. However, in the example shown in Fig. 3B based on sliding window segmentation, the overlap of the second window 206 allows the context of the first window to be accounted for, thus the combination of the caller purporting to be from HMRC and requesting a payment is considered for generation of the window probability of the second window 206. Thus, the generated window probability may indicate a high probability that the call is a scam call, likely exceeding the threshold in order to send the signal to generate the alert, as a result of the contextual carry over.

In the example described in relation to Fig. 2A, the window size is defined by tokens, for example as set to 512 tokens, and the interval size is defined by time, for example as set to 30 seconds. This means that every 30 seconds, the previous 512 tokens are taken to form a leading window and used as input to determine window probability, for example by performing classification. The leading window is recursively generated according to the interval size, such that the total number of windows generated increases as the telecommunication call progresses, indicated by T.

After segmenting the transcript, the processor 106 of the callee device 104 then performs natural language processing (NLP) on the transcription of each window (1030), for example by removing stop words and using lemmatization. The callee device 104 then performs classification based on the NLP-processed transcription segment using the fraud classification module 406 to generate a window probability for each window (1040), wherein each window probability represents a probability that the telecommunication call is a scam call based on classification of that window.

In the example described, performing classification comprises running, at the fraud classification module 406, at least one Neural Network model, such as Long short-term memory and Transformers with Classification & Sentiment Analysis. Preferably, performing classification comprises running at least a hierarchical Transformer model where windows of the transcription are fed into the Transformer model and output each window is then fed through a single recurrent or Transformer layer. The Neural Network Models are trained on data that is collected from at least one of: Honeypots, Scam Baiter call transcripts, Web-crawling, Callee-generated Transcripts, and scam-related data in textual and audio format from public and private (non)-governmental databases (including databases of crime-enforcement agencies), and users of the present invention.

In the example described, performing classification at the fraud classification module 406 also comprises running simultaneous keyword classification using at least one Machine Learning model, such as I Bayesian, Support Vector Machine, Logistic Regression, Decision trees etc. The Keyword Classification Models are trained on data that is collected from at least one of: Honeypots, Scam Baiter call transcripts, Web-crawling, Callee-generated transcripts, and scam-related data in textual and audio format from public and private (non)-governmental databases (including databases of crime-enforcement agencies).

In the example described, performing classification also comprises running a simultaneous Readability Test of the relative language level of the caller, for example such as a Flesch-Kincaid readability test.

Each of the above classification models is run at every interval for the newly-generated leading window. Each model outputs a probability which corresponds to the probability of the call being a scam based on the analysed window. Each probability is weighted based on the classification model it was derived from. The weighted probabilities are then combined to output a single window probability for the respective leading window.

The fraud classification module 406 of the callee device 106 also generates an aggregate probability (1050) based on aggregating the plurality of window probabilities. The aggregate probability represents an overall probability that the telecommunication call is a scam call based on the classification of all the windows processed such that it includes the current leading window probability, and all preceding window probabilities. The aggregate probability is continuously updated whilst the telecommunication call is in progress as the number of window probabilities increases based on an increasing total number of windows.

Generating the aggregate probability comprises aggregating the window probabilities for each window generated so far based on adaptive weightings of each window, wherein the adaptive weightings are configured to bias the aggregate probability towards the window probabilities of recent windows (including the leading window), relative to the window probabilities of older windows at the beginning of the telecommunication call.

Method steps 1010 to 1050 are continuously repeated for the duration of the call, such that the aggregate probability is updated at every interval. As the call progresses, the relative weightings assigned to the window probability for each window are updated to reduce the weighting of older window probabilities and assign relatively higher weightings to newer, more recent window probabilities.

In the event that the aggregate probability exceeds one of a set of predetermined thresholds, the processor 106 of callee device 104 sends a signal to generate an alert at the callee device 104. The signal sent is selected from a set of signals, based on which threshold from the set of thresholds has been exceeded. The signal to generate the alert may comprise at least one of (i) a control signal sent to the motor 414 configured to generate a haptic response, such as a vibrational alert at the callee device 104, (ii) a control signal configured to generate a visual alert on the display 412 of the callee device 104, such as a push notification, and/or (iii) a control signal configured cause an audible alert to be emitted from the speaker 410 of the device 104, for example a notification sound or verbal warning message. The processor 106 may also be configured to send a control signal configured to terminate the call.

For example, in the example described in relation to Fig. 2A, the method comprises a first threshold value of 0.5, a second threshold value of 0.7, and a third threshold value of 0.9. In response to an aggregate probability score of 0.5, the method sends a first signal to generate a first alert, wherein the first alert is a first visual message sent to the display 412 of the callee user device 104, such as "Be vigilant, this could be a scam". In response to an aggregate probability score of 0.7, the method sends a second signal from the set to generate a second alert, wherein the second alert is a second visual message sent to the display 412 and an audio message sent to the speaker 410 of the callee user device 104, such as "There is a high probability this call is a scam. Your scam detection software recommends that you hang up the call." In response to an aggregate probability score of 0.9, the method sends a third signal from the set to generate a third alert, the third alert corresponding with the call automatically being disconnected and a notification being sent to the first user device to that effect, for example wherein the processor 106 signals to terminate the call at the wireless communication interface 402. The skilled person will understand it is not required to escalate the response by sending each signal of the set separately and/or sequentially, for example in the event that the aggregate probability rises from, say, 0.4 to 0.9, the method may send the third signal only.

In addition to sending a signal based on the aggregate probability, the method also sends a signal to generate an alert at the callee device 104 based on applying a first set of rules to each window of the transcript, wherein applying each rule provides a binary indication of telecommunication fraud. In the event that the outcome of at least one of the applied rules indicates that the telecommunication call is fraudulent, a signal is sent to generate an alert at the callee device 104. For example, the first set of rules may comprise a first rule that a caller should never request a PIN number, and a second rule that that a caller should never request a CVV card number. Thus, if the caller of the telecommunication asks for a PIN number, a binary indication that the call is fraudulent is outputted, and a signal is sent to generate an alert at the callee user device 104.

The method as described in relation to Fig. 2A may be advantageous because the processing of the transcription is performed locally at the callee user device 104, thus neither of the audio stream of the telecommunication call, nor the transcription of the telecommunication call, need be shared with an additional remote device, for example a remote server. This may be advantageous to protect user privacy. The NLP models are adapted to be lightweight in order to be performed at the callee device 104.

**Fig. 2B** illustrates a second example system comprising a caller user device 102, a callee user device 104, and a remote server 108. An embodiment of a suitable callee user device 104 for use in the system of Fig. 2B may be substantially similar to that described above in relation to Fig. 4, however in this example the processor 106 of the callee device 104 would not comprise the fraud classification module 406. Instead, a fraud classification module is provided at remote server 108.

In the example system of Fig. 2B, the caller user device 102 initiates a telecommunication call with the callee user device 104, for example via the wireless communication module 402. In the event that the phone number associated with the caller user device 102 is unknown to the callee user device 104, for example meaning the phone number of the caller user device 102 is not on a whitelist stored on a memory of the callee user device 104, a processor 106 of the callee device 104 generates a real-time transcription of a telecommunication call using speech to text conversion. The transcription is generated based on the audio stream of the telecommunication call. The processor 106 identifies the caller and the callee in the transcription based on the audio data in the audio stream received from the caller device 102 at the wireless communication interface 402 and the audio data in the audio stream received from the callee device 104 via the microphone 408.

The processor 106 of the callee device 104 performs a pseudo-anonymising processing step to the transcription as the transcription is being generated. This may be performed by a pre-processing module (not shown) at the processer 106. The pseudo-anonymising processing step identifies types of personal alphanumeric data in the transcription and then replaces each instance of the identified alphanumeric data in the transcription with an indication of the type of personal alphanumeric data. For example, "My bank details are 12345678 and 01-01-01" may be replaced with "My bank details are [Account number] and [Sort code]". This may also reduce the amount of data required for encryption and transmission.

As the transcription is generated and pseudo-anonymised in real-time, the callee device 104 encrypts the transcription for sending. This may be performed by an encryption module (not shown) at the processer 106. As the transcription is being continuously generated, transcription may be encrypted in data packets. Firstly, the processor 106 of the callee device generates a random encryption key, REK, which is then used to encrypt each data packet of the transcript. The processor 106 then subsequently encrypts the random encryption key with a public key of a public-private key pair, wherein the public key is obtained from the remote server 108. The callee device 104 then sends the encrypted packet of the transcription and the encrypted random key to the remote server 108 via a first communication channel 110 between the callee device 104 and the remote server 108.

The remote server 108 obtains the encrypted packet of the transcription and the encrypted random key. The server 108 decrypts the obtained random encryption key using a stored private key of the public-private key pair. The server 108 then subsequently decrypts the encrypted transcription using the decrypted random encryption key. This process continues in real-time for each data packet of the transcript. This may be performed at a decryption module at the server 108. As each data packet decrypted, the data packets are collated to assemble the obtained transcript.

The remote server 108 then performs segmentation of the transcription, also in real-time (1020). The transcription is segmented into windows at intervals using sliding window segmentation in the same manner as is described in relation to Figs. 2A and 3B.

After a window has been generated, the remote server 108 then performs NLP and classification on the transcription of the leading window (1030) and generates a window probability for the leading window (1040), wherein each window probability represents a probability that the telecommunication call is a scam call based on the classification of that window. The classification is performed in the same manner as is described in relation to Fig. 2A, however in this example the classification is performed by a fraud classification module located at the remote server 108.

The fraud classification module at the remote server 108 also generates an aggregate probability (1050) based on aggregating the plurality of window probabilities. The aggregate probability represents an overall probability that the telecommunication call is a scam call based on the classification of all of the windows processed. Method steps 1010 to 1050 occur recursively for the duration of the call, such that the aggregate probability is continuously updated whilst the telecommunication call is in progress as the number of window probabilities increases based on an increasing total number of windows. Generating the aggregate probability comprises aggregating the window probabilities for each window based on adaptive weightings of each window, in the same manner as is described in relation to Fig. 2A.

In the event that the aggregate probability exceeds a predetermined threshold, the remote server 108 sends a signal via the first communication channel 110 to generate an alert at the callee device 104 (1060). The signal to generate the alert may comprise at least one of (i) a control signal configured to generate a haptic response using the motor 414, such as a vibrational alert at the callee device 104, (ii) a control signal configured to generate a visual alert on the display 412 of the callee device 104, such as a push notification, and/or (iii) a control signal configured cause an audible alert to be emitted from the speaker 410 of the device 104, for example a notification sound or verbal warning message. The remote server 108 may also be configured to send a signal to terminate the call.

The skilled person will understand that the method may also comprise a set of predetermined thresholds, wherein the remote server 108 sends a signal from a set of signals to generate an alert at the callee device 104 in the event that the aggregate probability exceeds one of the set of thresholds, for example in the manner as described in relation to Fig. 2A. The method may also comprise applying a set of rules and sending a signal to generate an alert at the callee device 104 in the event that a window breaches one of the rules, for example as described in relation to Fig. 2A, however in this example the rules are applied at the remote server 108.

The method as described in relation to Fig. 2B may be advantageous because the processing of the transcription is performed at a remote server (i.e. on the cloud) meaning the NLP and classification models do not consume processing power and memory at the callee device 104. This also means the NLP and classification models do not have to be adapted to be lightweight.

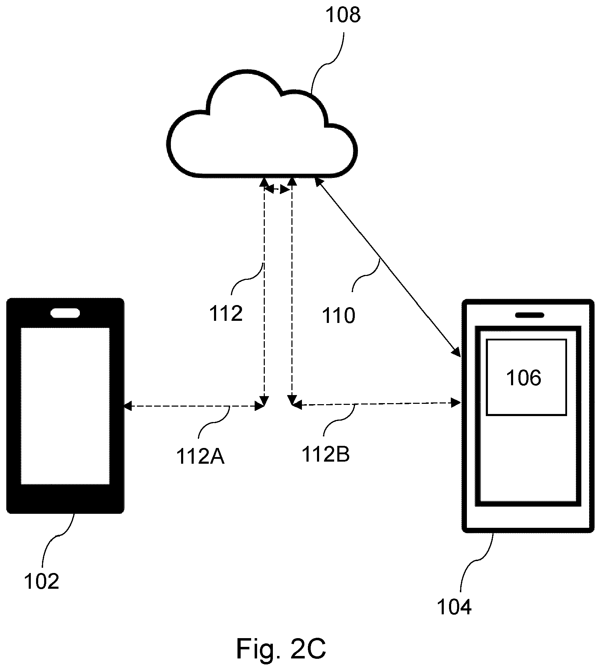

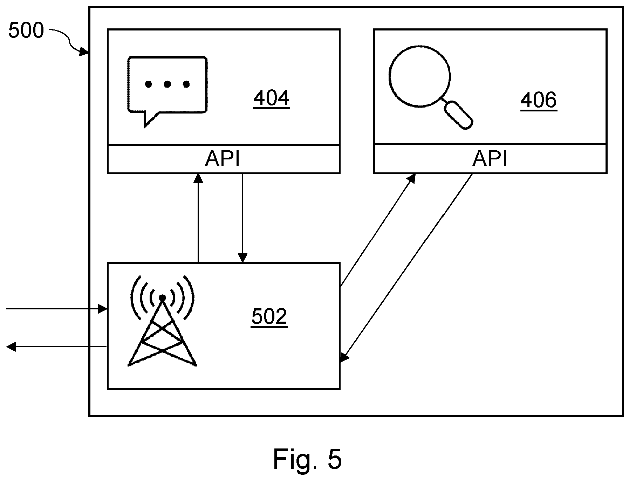

Fig. 2C illustrates a third example system comprising a caller user device 102, a callee user device 104, and a remote server 108. An example of a suitable remote server 108 is shown by way of a block diagram in **Fig. 5.**

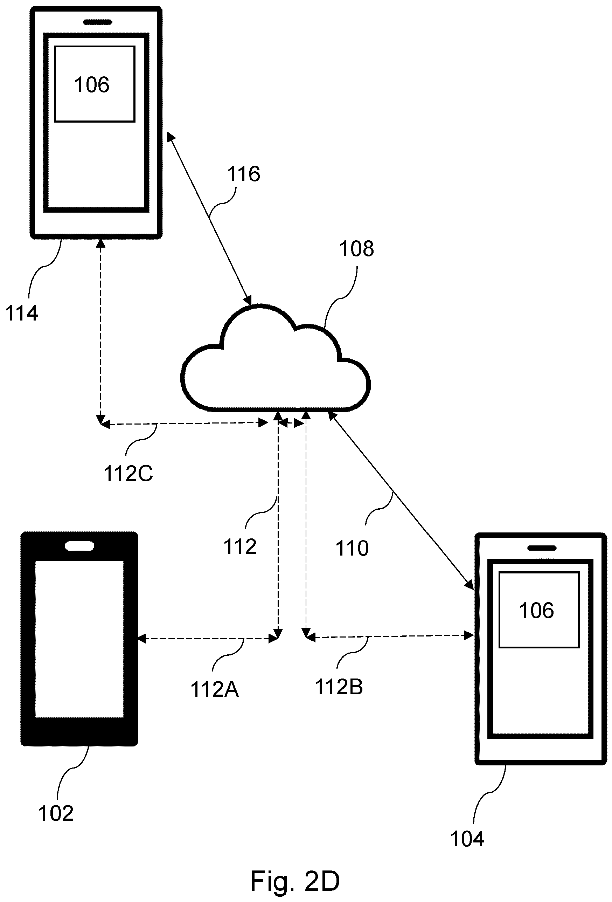

**Fig. 5** illustrates an embodiment of an apparatus 500 by way of a block diagram configured to perform the method of the present invention, for example a remote server, such as remote server 108 as described below in relation to Figs. 2C and 2D. The apparatus 500 comprises a VOIP entity 502 configured to provide VOIP infrastructure. The VOIP entity 502 is configured to receive audio stream data from calls between a user device (e.g., callee device 104) and a caller device (e.g., caller device 102. The VOIP entity 502 is configured to communicate with a speech to text processing module 404, via an API. The speech to text processing module 404 comprises a speech recognition model configured to generate a transcription of the audio stream from the call.

The VOIP entity 502 is also configured to communicate with a fraud classification module 406, via an API. The fraud classification module 406 comprises a fraud classification model configured to perform classification on the transcription generated by the speech to text processing module 404 to determine a probability of the call being fraudulent.

In the example shown in Fig. 5, the speech to text processing module 404 is configured to communicate with the VOIP entity 502 via an API. Likewise, the fraud classification module 406 is configured to communicate with the VOIP entity 502 via an API. However, the skilled person will understand that in other examples the speech to text processing module 404 may additionally be configured to communicate with the fraud classification module 406 via an API.

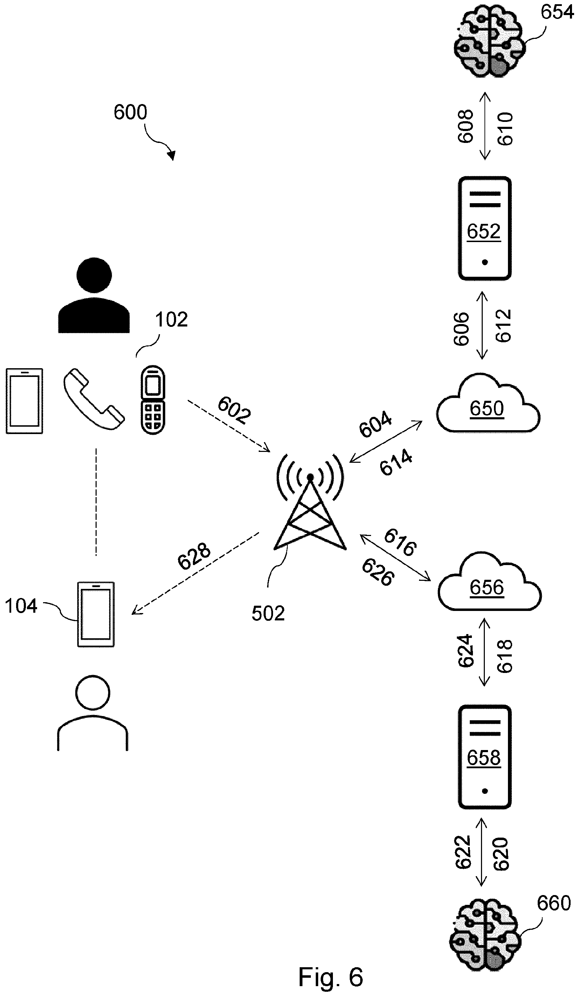

Although the apparatus 500 is described above as being the remote server 108 in relation to Figs. 2C and 2D, the skilled person will understand that, alternatively, the apparatus 500 may comprise a plurality of servers, for example wherein the speech to text processing module 404 is hosted on a second server separate to the VOIP entity 502 and/or wherein the fraud classification module 406 is hosted on a third server, also separate to the VOIP entity 502. This configuration is shown in more detail in Fig. 6. In other examples, the speech to text processing module 404 and fraud classification module 406 may both be hosted on a second server separate to the VOIP entity 502.

An embodiment of a suitable callee user device 104 for use in the system of Fig. 2C may be substantially similar to that described above in relation to Fig. 4, however in this example the processor 106 of the callee device 104 may not comprise the fraud classification module 406, nor the speech to text module 404.

Returning to the example shown in Fig. 2C, the caller user device 102 initiates a telecommunication call with the callee user device 104. In the event that the phone number associated with the caller user device 102 is unknown to the callee user device 104, for example meaning the phone number of the caller user device 102 is not on a whitelist stored on a memory of the callee user device 104, a processor 106 of the callee device 104 sends an indication of the incoming telecommunication call to the remote server 108.

The remote server 108 receives the indication of the incoming telecommunication call at the callee device 104 and routes the telecommunication call to a VOIP entity 502 via a first communication channel 112. The VOIP entity 502 may be an entity within the remote server 108. A real-time audio stream of the telecommunication call from the forwarded telecommunication call is then obtained by the remote server 108.

The server 108 determines the location of the callee user device 102 and selects a regulatory message from a set of regulatory messages based on the location of callee user device 102. The server 108 then sends a signal comprising the selected regulatory message to the caller user device 102, via the first communication channel 112. In this example, continuation with the telecommunication call by the caller device 102 indicates acceptance of terms and conditions.

The remote server 108 then sends the real-time audio stream to the speech to text module 404 via an API. The speech to text module 404 then generates a real-time transcription of a telecommunication call, based on the real-time audio stream, using speech to text processing. The processor 106 identifies the caller and the callee in the transcription based on the audio data in the audio stream received from the caller device 102 and the audio data in the audio stream received from the callee device 104.

The remote server 108 then performs a first pseudo-anonymising processing step to the transcription as the transcription is being generated, for example using a pre-processing module (not shown). The pseudo-anonymising processing step identifies types of personal alphanumeric data in the transcription and then replaces each instance of the identified alphanumeric data in the transcription with an indication of the type of personal alphanumeric data in the same manner as described in relation to Fig. 2B.

The remote server 108 then performs segmentation of the transcript, also in real-time (1020). The transcription is segmented into a plurality of windows using sliding window segmentation in the same manner as is described in relation to Figs. 2A and 3B.

After segmenting the transcript, the remote server 108 then performs NLP and classification on the transcription of each window (1030) and generates a window probability for each window (1040), wherein each window probability represents a probability that the telecommunication call is a scam call based on the classification of that window. The classification is performed in the same manner as is described in relation to Fig. 2A.

The remote server 108 also generates an aggregate probability (1050) based on aggregating the plurality of window probabilities. The aggregate probability represents an overall probability that the telecommunication call is a scam call based on the natural language processing of all of the windows processed. The aggregate probability is continuously updated whilst the telecommunication call is in progress as the number of window probabilities increases based on an increasing total number of windows. Generating the aggregate probability comprises aggregating the window probabilities for each window based on adaptive weightings of each window, in the same manner as is described in relation to Fig. 2A.

In the event that the aggregate probability exceeds a first predetermined threshold, the remote server 108 sends a signal via the second communication channel 110 to generate an alert at the callee device 104. The signal to generate the alert may comprise at least one of (i) a control signal configured to generate a haptic response, such as a vibrational alert at the callee device 104, (ii) a control signal configured to generate a visual alert on a display of the callee device 104, such as a push notification, (iii) a control signal configured cause an audible alert to be emitted from a speaker of the device, for example a notification sound or verbal warning message, and (iv) a control signal to request that a trusted user device be added to the telecommunication call. The remote server 108 may also be configured to send a signal via the second communication channel 110 to terminate the call.

In this example, in response to sending a control signal, via the second communication channel 110, to request that a trusted user device be added to the telecommunication call, the server 108 receives a signal from the first user device 110, via the second communication channel 110, indicating acceptance or rejection of the request. In response to receiving a signal indicating acceptance, the server 108 establishes a third communication channel 116 to a trusted user device 114 based on a device identifier, as illustrated in Fig. 2D. The server 108 retrieves the device identifier, such as a stored phone number of the trusted user device 114, from a memory, and uses the retrieved device identifier to establish the third communication channel 116 to the trusted user device 114. The trusted user device 114 is associated with a trusted contact, such as an emergency contact, family member, or bank manager, etc.

The server 108 then sends a signal, via the third communication channel 116, to the trusted user device to generate an alert on the trusted user device 114. The alert may be configured to generate a visual and/or audio alert, such as an SMS message or push notification, at the trusted user device 114. In this example, sending the signal to the trusted user device 114 comprises sending a signal to request that the trusted user device 114 joins the telecommunication call. In response to receiving a signal from the trusted user device 114, via the third communication channel 116, indicating acceptance of the request, the server 108 then adds the trusted user device 114 to the telecommunication call, via the first communication channel 112, for example via conference calling.

The skilled person will understand that the method may also comprise a set of predetermined hierarchical or tiered thresholds, wherein the remote server 108 sends a signal from a set of signals to generate an alert at the callee device 104 in the event that the aggregate probability exceeds one of the set of thresholds, for example in the manner as described in relation to Fig. 2A. The method may also comprise applying a set of rules and sending a signal to generate an alert at the callee device 104 in the event that a window breaches one of the rules, for example as described in relation to Fig. 2A. Furthermore, the skilled person will understand that, alternatively or in addition to sending a signal to generate an alert at the callee user device 104 via the second communication channel 110, the method may comprise wherein the server 108 sends a signal via the first communication channel 112 to add audio data into the audio stream of the telecommunication call, for example wherein the added audio data may comprise an audible alert. The audible alert may comprise at least one of (i) a warning sound; or (ii) a warning message.

The method as described in relation to Fig. 2C may be advantageous because the processing of the transcription is performed at a remote server (i.e. on the cloud) meaning the NLP and classification models do not consume processing power and memory at the callee device 104. This also means the NLP and classification models do not have to be adapted to be lightweight. Furthermore, re-routing the telecommunication call to a VOIP entity may be advantageous to obtain access to the real-time audio stream of the telecommunication call without requiring complex authorisation procedures and configuration of permissions to access the real-time audio stream of the telecommunication call from the user device receiving the telecommunication call directly.

The method as described in relation to Fig. 2C discusses generating the transcription and performing a first pseudo-anonymising processing step to the transcription at the remote server 108, however the skilled person will understand that, alternatively, the transcription may be generated, and the first pseudo-anonymising processing step may be performed at the callee device 104, wherein the pseudo-anonymised transcription is then encrypted and sent to the remote server 108 for processing, for example in the same manner as is described in relation to Fig. 2B.

Fig. 6 shows an embodiment of a system 600 by way of a block diagram configured to perform the method of the present invention, for example as described below in relation to Figs. 2C and 2D. The system 600 comprises a VOIP infrastructure 502. As illustrated by arrow 602, the VOIP infrastructure 502 receives audio stream data from a call, initiated by a caller device 102 to a callee user device 104.

The VOIP 502 then sends the audio stream to a speech to text API 650 and requests transcription (604). The API 650 sends the audio stream to a server 652 and requests transcription (606). The server 652 may be a physical server, or a cloud server. The server 652 sends the audio stream to a speech recognition model 654 and requests transcription (608). The speech recognition model 654 generates a transcription of the audio stream from the call. The speech recognition model 654 then sends the predicted transcription to the server 652 (610). The server 652 then sends the transcription to API 650 (612). The API 650 then sends the transcription to the VOIP infrastructure 502 (614).

The VOIP 502 then sends the transcription to a fraud classification API 656 and requests classification (616). The API 656 sends the transcription to a server 658 and requests classification (618). The server 658 may be a physical server, or a cloud server. The server 658 sends the transcription to a fraud classification model 660 and requests classification (620). The fraud classification model 660 classifies the transcript, for example according to any of the methods discussed above. The fraud classification model 660 then sends the predicted classification to the server 658 (622). The server 658 then sends the classification to API 656 (624). The API 656 then sends the classification to the VOIP infrastructure 502 (626).

The callee user device 104 then receives the classification as an alert (for example but not limited to a notification) from the VOIP infrastructure 502 (628). This may be sent to the callee user device 104 via a mobile application installed on the callee user device 104.

It will be appreciated from the discussion above that the embodiments shown in the Figures are merely exemplary, and include features which may be generalised, removed, or replaced as described herein and as set out in the claims. For example, the embodiments discussed above are described as performing sliding window segmentation of the transcript, as detailed in Fig. 3B. However, the skilled person will understand that other segmentation techniques may be used, for example including but not limited to segmenting the transcription according to the speaker, or by disjoint window segmentation.

In the context of the present disclosure other examples and variations of the systems and methods described herein will be apparent to a person skilled in the art. It will be appreciated in the context of the foregoing disclosure that the described embodiments are not to be construed as limiting. For example, where ranges are recited these are to be understood as disclosures of the limits of said range and any intermediate values between the two limits. As another example, with reference to the drawings in general, it will be appreciated that schematic functional block diagrams are used to indicate functionality of systems and apparatus described herein. It will be appreciated however that the functionality need not be divided in this way and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

In some examples the functionality of the controllers and processing means described herein (such as the processor of the callee device and/or the processor of the server) may be provided by mixed analogue and/or digital processing and/or control functionality. It may comprise any general-purpose processor, which may be configured to perform a method according to any one of those described herein. In some examples the controller may comprise digital logic, such as field programmable gate arrays, FPGA, application specific integrated circuits, ASIC, a digital signal processor, DSP, or by any other appropriate hardware. In some examples, one or more memory elements can store data and/or program instructions used to implement the operations described herein. Embodiments of the disclosure provide computer program products such as tangible, non-transitory storage media comprising program instructions operable to program a processor to perform any one or more of the methods described and/or claimed herein and/or to provide data processing apparatus as described and/or claimed herein. Such a controller may comprise an analogue control circuit which provides at least a part of this control functionality. An embodiment provides an analogue control circuit configured to perform any one or more of the methods described herein.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

**1.** A computer-implemented method for detecting telecommunication fraud, the method comprising:

obtaining, (1010) during a telecommunication call, a real-time transcription of the telecommunication call;
segmenting, (1020) in real-time, the transcription using sliding window segmentation
determining, (1040) in real-time for a leading window, a window probability, wherein the window probability represents a probability of telecommunication fraud for that window;

generating, (1050) in real-time, an aggregate probability of telecommunication fraud based on the window probability of the leading window and a window probability of at least one previous window; and

sending (1060) a signal to generate an alert in the event that the aggregate probability exceeds a threshold.

2. The computer-implemented method for detecting telecommunication fraud of any preceding claim wherein generating the aggregate probability is based on the window probability of the leading window and a window probability of at least one previous window, wherein each window probability is assigned a relative weighting based on the recentness of the associated window during the telecommunication call.

3. The computer-implemented method for detecting telecommunication fraud of any preceding claim, the method further comprising:

receiving an indication of an incoming telecommunication call at a first user device;

forwarding the telecommunication call to a Voice over Internet Protocol, VOIP, entity;

obtaining a real-time audio stream of the telecommunication call from the forwarded telecommunication call; and

obtaining the real-time transcription of the telecommunication call based on the real-time audio stream, optionally wherein forwarding the telecommunication call to the VOIP entity is based on receiving an indication of the incoming telecommunication wherein the telecommunication call originates from a telephone number which is not on a pre-determined whitelist.

4. The computer-implemented method for detecting telecommunication fraud of any preceding claim, wherein sending a signal to generate an alert in the event that the aggregate probability exceeds a threshold comprises sending a signal in a first communication channel to a first user device, wherein the first user device is a participant of the telecommunication call.

5. The computer-implemented method for detecting telecommunication fraud of claim 4, wherein the first communication channel is configured to transmit an audio stream of the telecommunication call to the first user device, optionally wherein sending the signal in the first communication channel comprises adding audio data into the audio stream, and optionally wherein adding audio data into the audio stream is configured to interrupt the telecommunication call with an audible alert.

6. The computer-implemented method for detecting telecommunication fraud of any of claim 5, wherein sending a signal to generate an alert in the event that the aggregate probability exceeds a threshold comprises sending a signal in a second communication channel to a first user device, wherein the first user device is a participant of the telecommunication call, and wherein the second communication channel is separate to the first communication channel, optionally wherein the signal sent in the second communication channel is configured to cause the first user device to generate a haptic response.

7. The computer-implemented method for detecting telecommunication fraud of any preceding claim, wherein sending the signal to generate an alert comprises:

generating an alert on the first user device; and

establishing a third communication channel to a second user device based on a device identifier associated with the alert;

optionally wherein the signal to generate the alert at the first user device is sent via a second communication channel, wherein the second communication channel is separate to a first communication channel, wherein the first communication channel is configured to transmit an audio stream of the telecommunication call to the first user device; and

optionally wherein the method further comprises:

receiving a control signal from the first user device, via the second communication channel, and determining, based on the control signal, whether to establish the third communication channel.

8. The computer-implemented method for detecting telecommunication fraud of claim 7 further comprising:

sending a signal to the second user device, via the third communication channel, to request that the second user device joins the telecommunication call;

receiving a signal from the second user device, via the third communication channel, in response to the signal to request that the second user device joins the telecommunication call; and

adding the second user device to the telecommunication call, via the first communication channel, in response to the received signal from the second user device.

9. The computer-implemented method for detecting telecommunication fraud of any preceding claim, further comprising:

applying a first processing step to the transcript, the first processing step being configured to identify at least one type of alphanumeric data; and

replacing in the transcription each instance of the at least one type of alphanumeric data with an indication of the type of alphanumeric data.

10. The computer-implemented method for detecting telecommunication fraud of any preceding claim further comprising performing classification in real time for the leading window, and determining the window probability based on the classification of the leading window, for example wherein performing classification comprises performing natural language processing on the transcription of the leading window.

11. The computer-implemented method for detecting telecommunication fraud of claim 10, wherein determining, for the leading window, the window probability based on the classification of the leading window, comprises:

applying a plurality of classification models to the leading window, each classification model outputting an indication of telecommunication fraud for the leading window;

applying a weighting to the indication of each classification model; and

generating the window probability based on aggregating the weighted indications of each classification model, optionally wherein the weighting applied to the indication of each classification model is adaptive based on at least one of (i) reported accuracy, (ii) recall, or (iii) precision.

12. The computer-implemented method for detecting telecommunication fraud of any preceding claim, further comprising:

applying a first set of rules to the transcription to generate an outcome for each rule, wherein each outcome provides a binary indication of telecommunication fraud; and

sending a signal to generate an alert in the event that at least one outcome indicates that the telecommunication call is fraudulent.

13. The computer-implemented method for detecting telecommunication fraud of any preceding claim, further comprising:

determining a location of a third user device, the third user device being a caller of the telecommunication call;

selecting a regulatory message from a set of regulatory messages, based on the location of third user device; and

sending a signal to send the selected regulatory message to the third user device.

14. A user equipment device (104) configured for use in a telecommunication network, the user equipment device (104) comprising:

a wireless communication interface (402) configured to receive telecommunication calls; and

a processor, the processor comprising a speech to text module (404) and a fraud classification module, (406) wherein the processor is configured to:

generate, at the speech to text module, a real-time transcription of a telecommunication call received by the wireless communication interface;

segment, in real-time, the transcription using sliding window segmentation;

perform, at the fraud classification module, classification on the transcription of a leading window;

determine, at the fraud classification module, a window probability based on classification of the leading window, wherein the window probability represents a probability of telecommunication fraud for the leading window;

generate, at the fraud classification module, in real-time, an aggregate probability of telecommunication fraud based on the window probability of the leading window and a window probability of at least one previous window; and

signal, in real-time, to generate an alert at the user equipment device in the event that the aggregate probability exceeds a threshold.

15. An apparatus (500) configured for use in a telecommunication network, the apparatus comprising:

a Voice-Over-Internet-Protocol, VOIP, entity (502) configured to receive telecommunication calls; and
a fraud classification module, (406) wherein the fraud classification module is configured to:

obtain a real-time transcription of a telecommunication call received by the VOIP entity;
segment, in real-time, the transcription using sliding window segmentation;
perform classification on the transcription of a leading window;
determine, for the leading window, a window probability based on classification of the leading window, wherein the window probability represents a probability of telecommunication fraud for the leading window;
generate in real-time, an aggregate probability of telecommunication fraud based on the window probability of the leading window and a window probability of at least one previous window; and
send a signal, in real-time, to generate an alert in the event that the aggregate probability exceeds a threshold.

**Patentansprüche**

1. Computerimplementiertes Verfahren zur Erkennung von Telekommunikationsbetrug, wobei das Verfahren umfasst:

Beziehen (1010) einer Echtzeit-Transkription eines Telekommunikationsanrufs während eines Telekommunikationsanrufs;
Segmentieren (1020) der Transkription in Echtzeit unter Verwendung von Gleitfenstersegmentierung;
Bestimmen (1040) einer Fensterwahrscheinlichkeit in Echtzeit für ein vorderes Fenster, wobei die Fensterwahrscheinlichkeit eine Wahrscheinlichkeit von Telekommunikationsbetrug für jenes Fenster darstellt;
Erzeugen (1050) einer Aggregatwahrscheinlichkeit eines Telekommunikationsbetrugs in Echtzeit auf der Basis der Fensterwahrscheinlichkeit des vorderen Fensters und einer Fensterwahrscheinlichkeit mindestens eines vorherigen Fensters; und
Senden (1060) eines Signals, um eine Warnung in dem Fall zu erzeugen, dass die Aggregatwahrscheinlichkeit einen Schwellenwert übersteigt.

2. Computerimplementiertes Verfahren zur Erkennung von Telekommunikationsbetrug nach einem vorhergehenden Anspruch, wobei das Erzeugen der Aggregatwahrscheinlichkeit auf der Fensterwahrscheinlichkeit des vorderen Fensters und einer Fensterwahrscheinlichkeit mindestens eines vorherigen Fensters basiert, wobei jeder Fensterwahrscheinlichkeit eine relative Gewichtung auf der Basis der Aktualität des assoziierten Fensters während des Telekommunikationsanrufs zugeteilt wird.

3. Computerimplementiertes Verfahren zur Erkennung von Telekommunikationsbetrug nach einem vorhergehenden Anspruch, wobei das Verfahren ferner umfasst:

Empfangen einer Angabe eines eingehenden Telekommunikationsanrufs an einer ersten Benutzervorrichtung;
Weiterleiten des Telekommunikationsanrufs an eine Voice-Over-Internet-Protocol-Entität, VOIP-Entität;
Beziehen eines Echtzeit-Audiostroms des Telekommunikationsanrufs aus dem weitergeleiteten Telekommunikationsanruf; und
Beziehen der Echtzeit-Transkription des Telekommunikationsanrufs auf der Basis des Echtzeit-Audiostroms, optional wobei das Weiterleiten des Telekommunikationsanrufs an die VOIP-Entität auf dem Empfangen einer Angabe der eingehenden Telekommunikation basiert, wobei der Telekommunikationsanruf von einer Telefonnummer stammt, die nicht auf einer vorbestimmten Whitelist ist.

4. Computerimplementiertes Verfahren zur Erkennung von Telekommunikationsbetrug nach einem vorhergehenden Anspruch, wobei das Senden eines Signals, um eine Warnung in dem Fall zu erzeugen, dass die Aggregatwahrscheinlichkeit einen Schwellenwert übersteigt, ein Senden eines Signals in einem ersten Kommunikationskanal an eine erste Benutzervorrichtung umfasst, wobei die erste Benutzervorrichtung ein Teilnehmer an dem Telekommunikationsanruf ist.

5. Computerimplementiertes Verfahren zur Erkennung von Telekommunikationsbetrug nach Anspruch 4, wobei der erste Kommunikationskanal dazu konfiguriert ist, einen Audiostrom des Telekommunikationsanrufs an die erste Benutzervorrichtung zu übertragen, optional wobei das Senden des Signals in dem ersten Kommunikationskanal ein Einfügen von Audiodaten in den Audiostrom umfasst, und optional wobei das Einfügen von Audiodaten in den Audiostrom dazu konfiguriert ist, den Telekommunikationsanruf mit einer hörbaren Warnung zu unterbrechen.

6. Computerimplementiertes Verfahren zur Erkennung von Telekommunikationsbetrug nach einem von Anspruch 5, wobei das Senden eines Signals, um eine Warnung in dem Fall zu erzeugen, dass die Aggregatwahrscheinlichkeit einen Schwellenwert übersteigt, ein Senden eines Signals in einem zweiten Kommunikationskanal an eine erste Benutzervorrichtung umfasst, wobei die erste Benutzervorrichtung ein Teilnehmer an dem Telekommunikationsanruf ist, und wobei der zweite Kommunikationskanal von dem ersten Kommunikationskanal getrennt ist, optional wobei das in dem zweiten Kommunikationskanal gesendete Signal dazu konfiguriert ist, zu bewirken, dass die erste Benutzervorrichtung eine haptische Antwort erzeugt.

7. Computerimplementiertes Verfahren zur Erkennung von Telekommunikationsbetrug nach einem vorhergehenden Anspruch, wobei das Senden des Signals, um eine Warnung zu erzeugen, umfasst:

Erzeugen einer Warnung auf der ersten Benutzervorrichtung; und
Aufbauen eines dritten Kommunikationskanals zu einer zweiten Benutzervorrichtung auf der Basis einer Vorrichtungskennung, die mit der Warnung assoziiert ist;
optional wobei das Signal, um die Warnung an der ersten Benutzervorrichtung zu erzeugen, mittels eines zweiten Kommunikationskanals gesendet wird, wobei der zweite Kommunikationskanal von einem ersten Kommunikationskanal getrennt ist, wobei der erste Kommunikationskanal dazu konfiguriert ist, einen Audiostrom des Telekommunikationsanrufs an die erste Benutzervorrichtung zu übertragen; und
optional wobei das Verfahren ferner umfasst:

Empfangen eines Steuersignals von der ersten Benutzervorrichtung mittels des zweiten Kommunikationskanals, und
Bestimmen auf der Basis des Steuersignals, ob der dritte Kommunikationskanal aufzubauen ist.

8. Computerimplementiertes Verfahren zur Erkennung von Telekommunikationsbetrug nach Anspruch 7, ferner umfassend:

Senden eines Signals an die zweite Benutzervorrichtung mittels des dritten Kommunikationskanals, um anzufordern, dass sich die zweite Benutzervorrichtung dem Telekommunikationsanruf zuschaltet;
Empfangen eines Signals von der zweiten Benutzervorrichtung mittels des dritten Kommunikationskanals als Reaktion auf das Signal, um anzufordern, dass sich die zweite Benutzervorrichtung dem Telekommunikationsanruf zuschaltet; und
Hinzufügen der zweiten Benutzervorrichtung zu dem Telekommunikationsanruf mittels des ersten Kommunikationskanals als Reaktion auf das empfangene Signal von der zweiten Benutzervorrichtung.

9. Computerimplementiertes Verfahren zur Erkennung von Telekommunikationsbetrug nach einem vorhergehenden Anspruch, ferner umfassend:

Anwenden eines ersten Verarbeitungsschritts auf das Transkript, wobei der erste Verarbeitungsschritt dazu konfiguriert ist, mindestens einen Typ von alphanumerischen Daten zu identifizieren; und
Ersetzen jeder Instanz des mindestens einen Typs von alphanumerischen Daten in der Transkription durch eine Angabe des Typs von alphanumerischen Daten.

10. Computerimplementiertes Verfahren zur Erkennung von Telekommunikationsbetrug nach einem vorhergehenden Anspruch, ferner umfassend ein Durchführen einer Klassifizierung in Echtzeit für das vordere Fenster, und ein Bestimmen der Fensterwahrscheinlichkeit auf der Basis der Klassifizierung des vorderen Fensters, beispielsweise wobei das Durchführen der Klassifizierung ein Durchführen einer natürlichen Sprachverarbeitung an der Transkription des vorderen Fensters umfasst.

11. Computerimplementiertes Verfahren zur Erkennung von Telekommunikationsbetrug nach Anspruch 10, wobei das Bestimmen der Fensterwahrscheinlichkeit für das vordere Fenster auf der Basis der Klassifizierung des vorderen Fensters umfasst:

Anwenden einer Vielzahl von Klassifizierungsmodellen auf das vordere Fenster, wobei jedes Klassifizierungsmodell eine Angabe eines Telekommunikationsbetrugs für das vordere Fenster ausgibt;
Anwenden einer Gewichtung auf die Angabe jedes Klassifizierungsmodells; und
Erzeugen der Fensterwahrscheinlichkeit auf der Basis eines Aggregierens der gewichteten Angaben jedes Klassifizierungsmodells, optional wobei die Gewichtung, die auf die Angabe jedes Klassifizierungsmodells angewendet wird, auf der Basis von mindestens einer bzw. einem von (i) einer berichteten Genauigkeit, (ii) einem Wiederabruf oder (iii) einer Präzision adaptiv ist.

12. Computerimplementiertes Verfahren zur Erkennung von Telekommunikationsbetrug nach einem vorhergehenden Anspruch, ferner umfassend:

Anwenden eines ersten Satzes von Regeln auf die Transkription, um ein Ergebnis für jede Regel zu erzeugen, wobei jedes Ergebnis eine binäre Angabe eines Telekommunikationsbetrugs bereitstellt; und
Senden eines Signals, um eine Warnung in dem Fall zu erzeugen, dass mindestens ein Ergebnis angibt, dass der Telekommunikationsanruf betrügerisch ist.

13. Computerimplementiertes Verfahren zur Erkennung von Telekommunikationsbetrug nach einem vorhergehenden Anspruch, ferner umfassend:

Bestimmen eines Orts einer dritten Benutzervorrichtung, wobei die dritte Benutzervorrichtung ein Anrufer des Telekommunikationsanrufs ist;
Auswählen einer Regulierungsnachricht aus einem Satz von Regulierungsnachrichten auf der Basis des Orts der dritten Benutzervorrichtung; und
Senden eines Signals, um die ausgewählte Regulierungsnachricht an die dritte Benutzervorrichtung zu senden.

14. Teilnehmergerätevorrichtung (104), die zur Verwendung in einem Telekommunikationsnetzwerk konfiguriert ist, wobei die Teilnehmergerätevorrichtung (104) umfasst:

eine drahtlose Kommunikationsschnittstelle (402), die dazu konfiguriert ist, Telekommunikationsanrufe zu empfangen; und
einen Prozessor, wobei der Prozessor ein Sprache-zu-Text-Modul (404) und ein Betrugsklassifizierungsmodul (406) umfasst, wobei der Prozessor konfiguriert ist zum:

Erzeugen einer Echtzeit-Transkription eines Telekommunikationsanrufs, der von der drahtlosen Kommunikationsschnittstelle empfangen wird, an dem Sprachezu-Text-Modul;
Segmentieren der Transkription in Echtzeit unter Verwendung von Gleitfenstersegmentierung;
Durchführen einer Klassifizierung an der Transkription eines vorderen Fensters an dem Betrugsklassifizierungsmodul;
Bestimmen einer Fensterwahrscheinlichkeit an dem Betrugsklassifizierungsmodul auf der Basis einer Klassifizierung des vorderen Fensters, wobei die Fensterwahrscheinlichkeit eine Wahrscheinlichkeit eines Telekommunikationsbetrugs für das vordere Fenster darstellt;
Erzeugen einer Aggregatwahrscheinlichkeit eines Telekommunikationsbetrugs in Echtzeit an dem Betrugsklassifizierungsmodul auf der Basis der Fensterwahrscheinlichkeit des vorderen Fensters und einer Fensterwahrscheinlichkeit mindestens eines vorherigen Fensters; und
Signalisieren in Echtzeit, um eine Warnung an der Teilnehmergerätevorrichtung in dem Fall zu erzeugen, dass die Aggregatwahrscheinlichkeit einen Schwellenwert übersteigt.

15. Einrichtung (500), die zur Verwendung in einem Telekommunikationsnetzwerk konfiguriert ist, wobei die Einrichtung umfasst:

eine Voice-Over-Internet-Protocol-Entität, VOIP-Entität (502), die dazu konfiguriert ist, Telekommunikationsanrufe zu empfangen; und
ein Betrugsklassifizierungsmodul (406), wobei das Betrugsklassifizierungsmodul konfiguriert ist zum:

Beziehen einer Echtzeit-Transkription eines Telekommunikationsanrufs, der von der VOIP-Entität empfangen wird;

Segmentieren der Transkription in Echtzeit unter Verwendung von Gleitfenstersegmentierung;

Durchführen einer Klassifizierung an der Transkription eines vorderen Fensters;

Bestimmen einer Fensterwahrscheinlichkeit für das vordere Fenster auf der Basis einer Klassifizierung des vorderen Fensters, wobei die Fensterwahrscheinlichkeit eine Wahrscheinlichkeit eines Telekommunikationsbetrugs für das vordere Fenster darstellt;

Erzeugen einer Aggregatwahrscheinlichkeit eines Telekommunikationsbetrugs in Echtzeit auf der Basis der Fensterwahrscheinlichkeit des vorderen Fensters und einer Fensterwahrscheinlichkeit mindestens eines vorherigen Fensters; und

Senden eines Signals in Echtzeit, um eine Warnung in dem Fall zu erzeugen, dass die Aggregatwahrscheinlichkeit einen Schwellenwert übersteigt.

**Revendications**

1. Procédé mis en œuvre par ordinateur pour détecter une fraude de télécommunication, le procédé comprenant :

l'obtention (1010), durant un appel de télécommunication, d'une transcription en temps réel de l'appel de télécommunication ;

la segmentation (1020), en temps réel, de la transcription grâce à l'utilisation de la segmentation par fenêtres glissantes ;

la détermination (1040), en temps réel pour une fenêtre principale, d'une probabilité de fenêtre, la probabilité de fenêtre représentant une probabilité de fraude de télécommunication pour cette fenêtre ;

la génération (1050), en temps réel, d'une probabilité cumulée de fraude de télécommunication basée sur la probabilité de fenêtre de la fenêtre principale et une probabilité de fenêtre d'au moins une fenêtre antérieure ; et

l'envoi (1060) d'un signal pour générer une alerte dans le cas où la probabilité cumulée dépasse un seuil.

2. Procédé mis en œuvre par ordinateur pour détecter une fraude de télécommunication de n'importe quelle revendication précédente, dans lequel la génération de la probabilité cumulée est basée sur la probabilité de fenêtre de la fenêtre principale et une probabilité de fenêtre d'au moins une fenêtre antérieure, dans lequel chaque probabilité de fenêtre est affectée d'une pondération relative basée sur la récence de la fenêtre associée durant l'appel de télécommunication.

3. Procédé mis en œuvre par ordinateur pour détecter une fraude de télécommunication de n'importe quelle revendication précédente, le procédé comprenant en outre :

la réception d'une indication d'un appel de télécommunication entrant au niveau d'un premier dispositif utilisateur ;

le réacheminement de l'appel de télécommunication à une entité de voix sur protocole internet, VOIP ;

l'obtention d'un flux audio en temps réel de l'appel de télécommunication à partir de l'appel de télécommunication réacheminé ; et

l'obtention de la transcription en temps réel de l'appel de télécommunication basée sur le flux audio en temps réel, facultativement dans lequel le réacheminement de l'appel de télécommunication à l'entité VOIP est basé sur la réception d'une indication de la télécommunication entrante, l'appel de télécommunication provenant d'un numéro de téléphone qui ne se trouve pas sur une liste blanche prédéterminée.

4. Procédé mis en œuvre par ordinateur pour détecter une fraude de télécommunication de n'importe quelle revendication précédente, dans lequel l'envoi d'un signal pour générer une alerte au cas où la probabilité cumulée dépasse un seuil comprend l'envoi d'un signal dans un premier canal de communication à un premier dispositif utilisateur, le premier dispositif utilisateur étant un participant à l'appel de télécommunication.

5. Procédé mis en œuvre par ordinateur pour détecter une fraude de télécommunication de la revendication 4, dans lequel le premier canal de communication est configuré pour transmettre un flux audio de l'appel de télécommunication au premier dispositif utilisateur, facultativement dans lequel l'envoi du signal dans le premier canal de communication comprend l'ajout de données audio dans le flux audio, et facultativement dans lequel l'ajout de données audio dans le flux audio est configuré pour interrompre l'appel de télécommunication par une alerte audible.

6. Procédé mis en œuvre par ordinateur pour détecter une fraude de télécommunication de n'importe laquelle de la revendication 5, dans lequel l'envoi d'un signal pour générer une alerte dans le cas où la probabilité cumulée dépasse un seuil comprend l'envoi d'un signal dans un deuxième canal de communication à un premier dispositif utilisateur, le premier dispositif utilisateur étant un participant à l'appel de télécommunication, et dans lequel le deuxième canal de communication est distinct du premier canal de communication, facultativement dans lequel le signal envoyé dans le deuxième canal de communication est configuré pour amener le premier dispositif utilisateur à générer une réponse haptique.

7. Procédé mis en œuvre par ordinateur pour détecter une fraude de télécommunication de n'importe quelle revendication précédente, dans lequel l'envoi du signal pour générer une alerte comprend :

la génération d'une alerte sur le premier dispositif utilisateur ; et
l'établissement d'un troisième canal de communication vers un deuxième dispositif utilisateur basé sur un identifiant de dispositif associé à l'alerte ;
facultativement dans lequel le signal pour générer l'alerte au niveau du premier dispositif utilisateur est envoyé par l'intermédiaire d'un deuxième canal de communication, le deuxième canal de communication étant distinct d'un premier canal de communication, le premier canal de communication étant configuré pour transmettre un flux audio de l'appel de télécommunication au premier dispositif utilisateur ; et
facultativement le procédé comprenant en outre :

la réception d'un signal de commande en provenance du premier dispositif utilisateur, par l'intermédiaire du deuxième canal de communication, et
la détermination, basée sur le signal de commande, de savoir s'il convient d'établir le troisième canal de communication.

8. Procédé mis en œuvre par ordinateur pour détecter une fraude de télécommunication de la revendication 7 comprenant en outre :

l'envoi d'un signal au deuxième dispositif utilisateur, par l'intermédiaire du troisième canal de communication, pour demander à ce que le deuxième dispositif utilisateur rejoigne l'appel de télécommunication ;
la réception d'un signal en provenance du deuxième dispositif utilisateur, par l'intermédiaire du troisième canal de communication, en réaction au signal pour demander à ce que le deuxième dispositif utilisateur rejoigne l'appel de télécommunication ; et
l'ajout du deuxième dispositif utilisateur à l'appel de télécommunication, par l'intermédiaire du premier canal de communication, en réaction au signal reçu en provenance du deuxième dispositif utilisateur.

9. Procédé mis en œuvre par ordinateur pour détecter une fraude de télécommunication de n'importe quelle revendication précédente, comprenant en outre :

l'application d'une première étape de traitement au transcript, la première étape de traitement étant configurée pour identifier au moins un type de données alphanumériques ; et
le remplacement, dans la transcription, de chaque instance de l'au moins un type de données alphanumériques par une indication du type de données alphanumériques.

10. Procédé mis en œuvre par ordinateur pour détecter une fraude de télécommunication de n'importe quelle revendication précédente comprenant en outre la réalisation d'une classification en temps réel pour la fenêtre principale, et la détermination de la probabilité de fenêtre basée sur la classification de la fenêtre principale, par exemple dans lequel la réalisation d'une classification comprend la réalisation d'un traitement en langage naturel sur la transcription de la fenêtre principale.

11. Procédé mis en œuvre par ordinateur pour détecter une fraude de télécommunication de la revendication 10, dans lequel la détermination, pour la fenêtre principale, de la probabilité de fenêtre basée sur la classification de la fenêtre principale, comprend :

l'application d'une pluralité de modèles de classification à la fenêtre principale, chaque modèle de classification produisant une indication d'une fraude de télécommunication pour la fenêtre principale ;
l'application d'une pondération à l'indication de chaque modèle de classification ; et
la génération de la probabilité de fenêtre basée sur le cumul des indications pondérées de chaque modèle de classification, facultativement dans lequel la pondération appliquée à l'indication de chaque modèle de classification est adaptative basée sur au moins un élément parmi : (i) exactitude rapportée, (ii) rappel, ou (iii) précision.

**12.** Procédé mis en œuvre par ordinateur pour détecter une fraude de télécommunication de n'importe quelle revendication précédente, comprenant en outre :

l'application d'un premier ensemble de règles à la transcription afin de générer un résultat pour chaque règle, chaque résultat fournissant une indication binaire de fraude de télécommunication ; et
l'envoi d'un signal afin de générer une alerte dans le cas où au moins un résultat indique que l'appel de télécommunication est frauduleux.

**13.** Procédé mis en œuvre par ordinateur pour détecter une fraude de télécommunication de n'importe quelle revendication précédente, comprenant en outre :

la détermination d'une localisation d'un troisième dispositif utilisateur, le troisième dispositif utilisateur étant un appelant de l'appel de télécommunication ;
la sélection d'un message réglementaire parmi un ensemble de messages réglementaires, basée sur la localisation d'un troisième dispositif utilisateur ; et
l'envoi d'un signal pour envoyer le message réglementaire sélectionné au troisième dispositif utilisateur.

**14.** Dispositif d'équipement utilisateur (104) configuré pour une utilisation dans un réseau de télécommunication, le dispositif d'équipement utilisateur (104) comprenant :

une interface de communication sans fil (402) configurée pour recevoir des appels de télécommunication ; et
un processeur, le processeur comprenant un module parole-en-texte (404) et un module de classification de fraude (406), le processeur étant configuré pour :

générer, au niveau du module parole-en-texte, une transcription en temps réel d'un appel de télécommunication reçu par l'interface de communication sans fil ;
segmenter, en temps réel, le transcription grâce à l'utilisation de la segmentation par fenêtres glissantes ;
réaliser, au niveau du module de classification de fraude, une classification sur la transcription d'une fenêtre principale ;
déterminer, au niveau du module de classification de fraude, une probabilité de fenêtre basée sur une classification de la fenêtre principale, la probabilité de fenêtre représentant une probabilité de fraude de télécommunication pour la fenêtre principale ;
générer, au niveau du module de classification de fraude, en temps réel, une probabilité cumulée de fraude de télécommunication basée sur la probabilité de fenêtre de la fenêtre principale et une probabilité de fenêtre d'au moins une fenêtre antérieure ; et
donner un signal, en temps réel, pour générer une alerte au niveau du dispositif d'équipement utilisateur dans le cas où la probabilité cumulée dépasse un seuil.

**15.** Appareil (500) configuré pour une utilisation dans un réseau de télécommunication, l'appareil comprenant :

une entité de voix sur protocole internet, VOIP, (502) configurée pour recevoir des appels de télécommunication ; et
un module de classification de fraude, (406), le module de classification de fraude étant configuré pour :

obtenir une transcription en temps réel d'un appel de télécommunication reçu par l'entité VOIP ;
segmenter, en temps réel, la transcription grâce à l'utilisation de la segmentation par fenêtres glissantes ;
réaliser une classification sur la transcription d'une fenêtre principale ;
déterminer, pour la fenêtre principale, une probabilité de fenêtre basée sur une classification de la fenêtre principale, la probabilité de fenêtre représentant une probabilité de fraude de télécommunication pour la fenêtre principale ;
générer, en temps réel, une probabilité cumulée de fraude de télécommunication basée sur la probabilité de fenêtre de la fenêtre principale et une probabilité de fenêtre d'au moins une fenêtre antérieure ; et
envoyer un signal, en temps réel, pour générer une alerte dans le cas où la probabilité cumulée dépasse un seuil.

1000

Obtain a real-time transcript of a telecommunication call (1010)

Segment the transcript in real-time using sliding window segmentation (1020)

For the leading window, perform classification on the transcript (1030)

For the leading window, determine a window probability based on the classification of the window (1040)

Generate an aggregate probability based on the window probability of the leading window and a window probability of at least one previous window (1050)

Send a signal to generate an alert in the event that the second probability exceeds a threshold (1060)

Fig. 1

102

105

106

104

Fig. 2A

108

110

102

105

106

104

Fig. 2B

Fig. 2C

Fig. 2D

T

W

202          206

"Good afternoon. We are calling from HMRC."

"We need to take a payment from you"

204                    208A

Fig. 3A

I

T

202

W

"Good afternoon. We are calling from HMRC."

204

O

206

"calling from HMRC. We need to take a payment"

208B

Fig. 3B

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150288791 A
- US 9692885 B
- EP 3873075 A